(19) **Europäisches Patentamt / European Patent Office / Office européen des brevets**

(11) **EP 4 750 173 A1**

(12) **EUROPEAN PATENT APPLICATION**
published in accordance with Art. 153(4) EPC

(43) Date of publication:
**27.05.2026 Bulletin 2026/22**

(21) Application number: **23945423.4**

(22) Date of filing: **18.07.2023**

(51) International Patent Classification (IPC):
**H04W 52/36** (2009.01)

(52) Cooperative Patent Classification (CPC):
**H04W 52/36; H04W 72/044; H04W 72/231; H04W 72/50**

(86) International application number:
**PCT/CN2023/107983**

(87) International publication number:
**WO 2025/015528 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD FOR DETERMINING POWER HEADROOM REPORT, AND TERMINAL AND NETWORK DEVICE**

(57) The present disclosure relates to a method for determining a power headroom report (PHR), and a terminal and a network device. The method comprises: transmitting first information, the first information being used for indicating one or N pieces of power headroom information, the one or N pieces of power headroom information being carried in a primary PHR, the type of the PHR being type 1, and N being an integer greater than 1; wherein the power headroom information at least comprises a power headroom (PH) and a maximum configured transmit power, different power headroom information have correspondences with different uplink transmission waveforms, and the uplink transmission waveforms are used for transmitting a physical uplink shared channel (PUSCH). By means of the present disclosure, a network device can determine a scheduling decision for waveforms on the basis of power headroom information of different waveforms, improving scheduling efficiency.

Fig.2A

EP 4 750 173 A1

**Description**

**FIELD**

The present disclosure relates to the field of communication technologies, and in particular, to a method for determining power headroom report, a terminal, and a network device.

**BACKGROUND**

A terminal needs to report a power headroom report (PHR) to a network device. The network device can learn power information of the terminal through the PHR and perform related scheduling for the terminal.

**SUMMARY**

When the network device instructs the terminal to perform waveform switching, it cannot perform a scheduling for the waveform switching based on the power headroom information of the terminal under different waveforms.
Embodiments of the present disclosure provide a method for determining power headroom report, a terminal, and a network device.
According to a first aspect of the embodiments of the present disclosure, a method for determining power headroom report is provided, including: sending first information, where the first information is used to indicate 1 or N pieces of power headroom information, the 1 or N pieces of power headroom information are carried in one power headroom report PHR, the type of the PHR is type 1, and N is an integer greater than 1; where the power headroom information at least includes power headroom PH and a configured maximum transmit power, different pieces of power headroom information correspond to different uplink transmission waveforms, and the different uplink transmission waveforms are used to transmit physical uplink shared channels (PUSCHs).
According to a second aspect of the embodiments of the present disclosure, a method for determining power headroom report is provided, including: receiving first information, where the first information is used to indicate 1 or N pieces of power headroom information, the 1 or N pieces of power headroom information are carried in one power headroom report PHR, the type of the PHR is type 1, and N is an integer greater than 1; where the power headroom information at least includes power headroom PH and a configured maximum transmit power, different pieces of power headroom information correspond to different uplink transmission waveforms, and the different uplink transmission waveforms are used to transmit physical uplink shared channels (PUSCHs).
According to a third aspect of the embodiments of the present disclosure, a method for determining power headroom report is provided, including: sending, by a terminal, first information to a network device, where the first information is used to indicate 1 or N pieces of power headroom information, the 1 or N pieces of power headroom information are carried in one power headroom report PHR, the type of the PHR is type 1, and N is an integer greater than 1; where the power headroom information at least includes power headroom PH and a configured maximum transmit power, different pieces of power headroom information correspond to different uplink transmission waveforms, and the different uplink transmission waveforms are used to transmit physical uplink shared channels (PUSCHs); and receiving, by the network device, the first information.
According to a fourth aspect of the embodiments of the present disclosure, a terminal is provided, including: a transceiver module, configured to send first information, where the first information is used to indicate 1 or N pieces of power headroom information, the 1 or N pieces of power headroom information are carried in one power headroom report PHR, the type of the PHR is type 1, and N is an integer greater than 1; where the power headroom information at least includes power headroom PH and a configured maximum transmit power, different pieces of power headroom information correspond to different uplink transmission waveforms, and the different uplink transmission waveforms are used to transmit physical uplink shared channels (PUSCHs).
According to a fifth aspect of the embodiments of the present disclosure, a network device is provided, including: a transceiver module, configured to receive first information, where the first information is used to indicate 1 or N pieces of power headroom information, the 1 or N pieces of power headroom information are carried in one power headroom report PHR, the type of the PHR is type 1, and N is an integer greater than 1; where the power headroom information at least includes power headroom PH and a configured maximum transmit power, different pieces of power headroom information correspond to different uplink transmission waveforms, and the different uplink transmission waveforms are used to transmit physical uplink shared channels (PUSCHs).
According to a sixth aspect of the embodiments of the present disclosure, a terminal is provided, including: one or more processors; where the processor is configured to execute the communication method according to the first aspect.
According to a seventh aspect of the embodiments of the present disclosure, a network device is provided, including: one or more processors; where the processor is configured to execute the communication method according to the second aspect.

According to an eighth aspect of the embodiments of the present disclosure, a communication system is provided, including a terminal and a network device, where the terminal is configured to implement the communication method according to the first aspect, and the network device is configured to implement the communication method according to the second aspect.

According to a ninth aspect of the embodiments of the present disclosure, a storage medium is provided, where the storage medium stores instructions, where when the instructions run on a communication device, the communication device is caused to execute the communication method according to the first aspect and the second aspect.

According to the embodiments of the present disclosure, the network device can determine scheduling decisions for waveforms based on power headroom information of different waveforms, thereby improving scheduling efficiency.

## BRIEF DESCRIPTION OF THE DRAWINGS

In order to illustrate the technical solutions in the embodiments of the present disclosure more clearly, the drawings required for describing the embodiments are briefly introduced below. The following drawings are merely some embodiments of the present disclosure, and do not specifically limit the scope of the present disclosure.

FIG. 1A is an exemplary schematic diagram of an architecture of a communication system according to an embodiment of the present disclosure.

FIG. 1B is a diagram of a PHR configuration format in a single carrier according to an embodiment of the present disclosure.

FIG. 1C is a diagram of a PHR configuration format in multiple carriers according to an embodiment of the present disclosure.

FIG. 2A is an exemplary interaction diagram of a method for determining power headroom report according to an embodiment of the present disclosure.

FIG. 2B is a diagram of a PHR configuration format according to an embodiment of the present disclosure.

FIG. 2C is a diagram of a PHR configuration format according to an embodiment of the present disclosure.

FIG. 2D is a diagram of a PHR configuration format according to an embodiment of the present disclosure.

FIG. 3A is a flowchart of a method for determining power headroom report according to an embodiment of the present disclosure.

FIG. 3B is a flowchart of a method for determining power headroom report according to an embodiment of the present disclosure.

FIG. 3C is a flowchart of a method for determining power headroom report according to an embodiment of the present disclosure.

FIG. 4A is a flowchart of a method for determining power headroom report according to an embodiment of the present disclosure.

FIG. 4B is a flowchart of a method for determining power headroom report according to an embodiment of the present disclosure.

FIG. 4C is a flowchart of a method for determining power headroom report according to an embodiment of the present disclosure.

FIG. 5 is a flowchart of a method for determining power headroom report according to an embodiment of the present disclosure.

FIG. 6A is a schematic diagram of a terminal according to an embodiment of the present disclosure.

FIG. 6B is a schematic diagram of a network device according to an embodiment of the present disclosure.

FIG. 7A is a schematic diagram of a communication device according to an embodiment of the present disclosure.

FIG. 7B is a schematic diagram of a chip structure according to an embodiment of the present disclosure.

## DETAILED DESCRIPTION

Embodiments of the present disclosure provide a method for determining power headroom report, a terminal, and a network device.

In a first aspect, an embodiment of the present disclosure provides a method for determining power headroom report, including: sending first information, where the first information is used to indicate 1 or N pieces of power headroom information, the 1 or N pieces of power headroom information are carried in one power headroom report PHR, the type of the PHR is type 1, and N is an integer greater than 1; where the power headroom information at least includes power headroom PH and a configured maximum transmit power, different pieces of power headroom information correspond to different uplink transmission waveforms, and the different uplink transmission waveforms are used to transmit physical uplink shared channels (PUSCHs).

In the above embodiment, by reporting power headroom information corresponding to different waveforms in one PHR, the terminal enables the network device to determine scheduling decisions for waveforms based on the power headroom information corresponding to different waveforms reported by the terminal, thereby improving scheduling efficiency.

In combination with some embodiments of the first aspect, in some embodiments, the method further includes: receiving second information, where the second information is used to instruct the terminal to report N pieces of power headroom information, and the N pieces of power headroom information correspond to N uplink transmission waveforms.

In the above embodiment, by sending the second information, the network device instructs the terminal to report N pieces of power headroom information in one PHR report, so that the network device can learn power headroom information of multiple waveforms in one PHR report, thereby improving the efficiency of PHR reporting.

In combination with some embodiments of the first aspect, in some embodiments, the N pieces of power headroom information are determined based on at least one of: a currently transmitted PUSCH; a reference PUSCH configured by a network device; or a last transmitted PUSCH within a time window.

In combination with some embodiments of the first aspect, in some embodiments, where a currently transmitted PUSCH and a PUSCH carrying the power headroom information report satisfy a time requirement, the N pieces of power headroom information are determined based on the currently transmitted PUSCH; the N pieces of power headroom information include: first power headroom information, where the first power headroom information is actual power headroom information determined based on an uplink transmission waveform used in the currently transmitted PUSCH; second power headroom information, where the second power headroom information is virtual power headroom information determined based on a target waveform, and the target waveform is a waveform to which the terminal is to switch for a PUSCH transmission.

In the above embodiment, where the currently transmitted PUSCH and the PUSCH carrying the power headroom information report satisfy the time requirement, the terminal calculates an actual PH based on the waveform used by the currently transmitted PUSCH and calculates a virtual PH based on the waveform to be switched to, so that the terminal can determine power headroom information under different waveforms, thereby improving the flexibility of PHR reporting.

In combination with some embodiments of the first aspect, in some embodiments, where a currently transmitted PUSCH and a PUSCH carrying the power headroom information report do not satisfy a time requirement, or where the terminal is not currently transmitting a PUSCH, the N pieces of power headroom information are determined based on reference PUSCHs, where the reference PUSCHs are respectively configured based on different uplink transmission waveforms; the N pieces of power headroom information are virtual power headroom information determined based on different uplink transmission waveform configurations of the reference PUSCHs.

In the above embodiment, where the currently transmitted PUSCH and the PUSCH carrying the power headroom information report do not satisfy the time requirement, or where the terminal is not currently transmitting a PUSCH, the terminal determines virtual power headroom information under different waveforms based on the reference PUSCHs, thereby improving the flexibility of PHR reporting.

In combination with some embodiments of the first aspect, in some embodiments, the N pieces of power headroom information are virtual power headroom information determined based on different uplink transmission waveform configurations of a currently transmitted PUSCH.

In the above embodiment, when calculating virtual power headroom information, configuration parameters of the currently transmitted PUSCH may be used for determination, to improve the accuracy of the determined power headroom information.

In combination with some embodiments of the first aspect, in some embodiments, in a case where a PUSCH transmission exists in a time window, a reference PUSCH is a last transmitted PUSCH within the time window.

In the above embodiment, if a PUSCH has been transmitted within the time window, the terminal determines power headroom information corresponding to different waveforms based on the last transmitted PUSCH, thereby improving the accuracy of determining the power headroom information.

In combination with some embodiments of the first aspect, in some embodiments, the configured maximum transmit power is determined based on a maximum power reduction (MPR), a power management maximum power reduction (P-MPR), and an additional maximum power reduction (A-MPR) of the terminal.

In the above embodiment, the calculation of the maximum transmit power considers MPR, P-MPR, and A-MPR, thereby improving the accuracy of the maximum transmit power calculation.

In combination with some embodiments of the first aspect, in some embodiments, the uplink transmission waveforms are discrete Fourier transform spread orthogonal frequency division multiplexing (DFT-s-OFDM) waveforms, and power headroom information corresponding to the DFT-s-OFDM waveforms is determined based on a contiguous frequency domain resource allocation (FDRA).

In the above embodiment, when calculating power headroom information for DFT-s-OFDM waveforms, contiguous FDRA needs to be considered for determination, to improve the accuracy of determining the power headroom information.

In combination with some embodiments of the first aspect, in some embodiments, the uplink transmission waveforms are cyclic prefix orthogonal frequency division multiplexing (CP-OFDM) waveforms, a first FDRA corresponding to the CP-OFDM waveforms is non-contiguous or contiguous, and power headroom information corresponding to DFT-s-OFDM waveforms is determined based on a second FDRA; the second FDRA is determined based on the first FDRA or the second FDRA is determined based on a pre-configuration, and the second FDRA is a contiguous frequency domain resource allocation.

In combination with some embodiments of the first aspect, in some embodiments, the second information is not enabled or the second information is not configured, and the first information includes one piece of power headroom information.

In combination with some embodiments of the first aspect, in some embodiments, an uplink transmission waveform corresponding to the one piece of power headroom information is a target waveform, and the target waveform is a waveform to which the terminal is to switch for a PUSCH transmission; the sending first information includes: sending the first information before receiving a first command; where the first command is used to instruct the terminal to perform a switching of an uplink transmission waveform.

In the above embodiment, the terminal determines the power headroom information to be reported based on the target waveform and reports it before waveform switching, so that the network device can determine whether to instruct the terminal to perform a waveform switching based on the power headroom information corresponding to the target waveform, thereby improving scheduling efficiency.

In combination with some embodiments of the first aspect, in some embodiments, an uplink transmission waveform corresponding to the one piece of power headroom information is a waveform actually used for transmitting a PUSCH; the sending first information includes: sending the first information after receiving a first command; where the first command is used to instruct the terminal to perform a switching of an uplink transmission waveform.

In the above embodiment, the terminal determines the power headroom information to be reported based on the currently used waveform and reports it after waveform switching, so that the network device can determine whether to instruct the terminal to perform a waveform switching based on the power headroom information corresponding to the currently used waveform, thereby improving scheduling efficiency.

In combination with some embodiments of the first aspect, in some embodiments, the uplink transmission waveform corresponding to the one piece of power headroom information is predefined and/or configured by an RRC signaling.

In combination with some embodiments of the first aspect, in some embodiments, the second information is carried in a redefined RRC signaling or a newly added RRC signaling.

In the above embodiment, when the network device instructs the terminal to report N pieces of power headroom information in one PHR, the RRC signaling needs to be redefined, so that the terminal can determine to report N pieces of power headroom information in one PHR through the RRC signaling, thereby improving the flexibility of PHR reporting.

In combination with some embodiments of the first aspect, in some embodiments, the first information is carried in the following signaling: a redefined media access control control element (MAC-CE); or a newly added MAC-CE.

In the above embodiment, when the terminal reports N pieces of power headroom information in one PHR, the MAC-CE carrying the PHR needs to be redefined, so that the MAC-CE can carry N pieces of power headroom information in one PHR report, thereby improving the flexibility of PHR reporting.

In combination with some embodiments of the first aspect, in some embodiments, the terminal transmits the PUSCH based on a single carrier or carrier aggregation (CA).

In a second aspect, an embodiment of the present disclosure provides a method for determining power headroom report, including: receiving first information, where the first information is used to indicate 1 or N pieces of power headroom information, the 1 or N pieces of power headroom information are carried in one power headroom report PHR, the type of the PHR is type 1, and N is an integer greater than 1; where the power headroom information at least includes power headroom PH and a configured maximum transmit power, different pieces of power headroom information correspond to different uplink transmission waveforms, and the different uplink transmission waveforms are used to transmit physical uplink shared channels (PUSCHs).

In combination with some embodiments of the second aspect, in some embodiments, the method further includes: sending second information, where the second information is used to instruct a terminal to report N pieces of power headroom information, and the N pieces of power headroom information correspond to N uplink transmission waveforms.

In combination with some embodiments of the second aspect, in some embodiments, the N pieces of power headroom information are determined based on at least one of: a currently transmitted PUSCH; a reference PUSCH configured by a network device; or a last transmitted PUSCH within a time window.

In combination with some embodiments of the second aspect, in some embodiments, where a currently transmitted PUSCH and a PUSCH carrying the power headroom information report satisfy a time requirement, the N pieces of power headroom information are determined based on the currently transmitted PUSCH; the N pieces of power headroom information include: first power headroom information, where the first power headroom information is actual power headroom information determined based on an uplink transmission waveform used in the currently transmitted PUSCH; second power headroom information, where the second power headroom information is virtual power headroom information determined based on a target waveform, and the target waveform is a waveform to which a terminal is to switch for a PUSCH transmission.

In combination with some embodiments of the second aspect, in some embodiments, where a currently transmitted PUSCH and a PUSCH carrying the power headroom information report do not satisfy a time requirement, or where a terminal is not currently transmitting a PUSCH, the N pieces of power headroom information are determined based on reference PUSCHs, where the reference PUSCHs are respectively configured based on different uplink transmission waveforms; the N pieces of power headroom information are virtual power headroom information determined based on different waveform configurations of the reference PUSCHs.

In combination with some embodiments of the second aspect, in some embodiments, the N pieces of power headroom information are virtual power headroom information determined based on different uplink transmission waveform configurations of a currently transmitted PUSCH.

In combination with some embodiments of the second aspect, in some embodiments, where a PUSCH transmission exists within a time window, a reference PUSCH is a last transmitted PUSCH within the time window.

In combination with some embodiments of the second aspect, in some embodiments, the configured maximum transmit power is determined based on a maximum power reduction (MPR), a power management maximum power reduction (P-MPR) and an additional maximum power reduction (A-MPR) of a terminal.

In combination with some embodiments of the second aspect, in some embodiments, the uplink transmission waveforms are discrete Fourier transform spread orthogonal frequency division multiplexing (DFT-s-OFDM) waveforms, and power headroom information corresponding to the DFT-s-OFDM waveforms is determined based on a contiguous frequency domain resource allocation (FDRA).

In combination with some embodiments of the second aspect, in some embodiments, the uplink transmission waveforms are cyclic prefix orthogonal frequency division multiplexing (CP-OFDM) waveforms, a first FDRA corresponding to the CP-OFDM waveforms is non-contiguous, and power headroom information corresponding to DFT-s-OFDM waveforms is determined based on a second FDRA; the second FDRA is determined based on the first FDRA or the second FDRA is determined based on a pre-configuration, and the second FDRA is a contiguous frequency domain resource allocation.

In combination with some embodiments of the second aspect, in some embodiments, the second information is not enabled or the second information is not configured, and the first information includes one piece of power headroom information.

In combination with some embodiments of the second aspect, in some embodiments, an uplink transmission waveform corresponding to the one piece of power headroom information is a target waveform, and the target waveform is a waveform to which a terminal is to switch for a PUSCH transmission;

the sending first information includes: sending the first information before receiving a first command; where the first command is used to instruct the terminal to perform a switching of an uplink transmission waveform.

In combination with some embodiments of the second aspect, in some embodiments, an uplink transmission waveform corresponding to the one piece of power headroom information is a waveform actually used for transmitting a PUSCH; the sending first information includes: sending the first information after receiving a first command; where the first command is used to instruct the terminal to perform a switching of an uplink transmission waveform.

In combination with some embodiments of the second aspect, in some embodiments, the uplink transmission waveform corresponding to the one piece of power headroom information is predefined and/or configured by an RRC signaling.

In combination with some embodiments of the second aspect, in some embodiments, the second information is carried in the following signaling: a redefined RRC signaling; or a newly added RRC signaling.

In combination with some embodiments of the second aspect, in some embodiments, the first information is carried in the following signaling: a redefined media access control control element (MAC-CE); or a newly added MAC-CE.

In combination with some embodiments of the second aspect, in some embodiments, the terminal transmits the PUSCH based on a single carrier or carrier aggregation (CA).

In a third aspect, an embodiment of the present disclosure provides a method for determining power headroom report, including: sending, by a terminal, first information to a network device, where the first information is used to indicate 1 or N pieces of power headroom information, the 1 or N pieces of power headroom information are carried in one power headroom report PHR, the type of the PHR is type 1, and N is an integer greater than 1; where the power headroom information at least includes power headroom PH and a maximum transmit power, different pieces of power headroom information correspond to different uplink transmission waveforms, and the different uplink transmission waveforms are used to transmit physical uplink shared channels (PUSCHs); and receiving, by the network device, the first information.

In a fourth aspect, an embodiment of the present disclosure provides a terminal, where the terminal includes at least one of a transceiver module and a processing module; where the terminal is configured to perform the optional implementations of the first aspect and the third aspect.

In a fifth aspect, an embodiment of the present disclosure provides a network device, where the access network device includes at least one of a transceiver module and a processing module; where the access network device is configured to perform the optional implementations of the second aspect and the third aspect.

In a sixth aspect, an embodiment of the present disclosure provides a terminal, where the terminal includes: one or more processors; where the terminal is configured to perform the optional implementations of the first aspect and the third aspect.

In a seventh aspect, an embodiment of the present disclosure provides a network device, where the network device includes: one or more processors; where the network device is configured to perform the optional implementations of the second aspect and the third aspect.

In an eighth aspect, an embodiment of the present disclosure provides a communication system, where the communication system includes: a terminal, and a network device; where the terminal is configured to perform the method as described in the optional implementations of the first aspect and the third aspect, and the network device is configured to perform the method as described in the optional implementations of the second aspect and the third aspect.

In a ninth aspect, an embodiment of the present disclosure provides a storage medium, where the storage medium stores instructions, where when the instructions run on a communication device, the communication device is caused to perform the method as described in the optional implementations of the first aspect and the third aspect, and the second aspect and the third aspect.

In a tenth aspect, an embodiment of the present disclosure provides a program product, where when the program product is executed by a communication device, the communication device is caused to perform the method as described in the optional implementations of the first aspect and the third aspect, and the second aspect and the third aspect.

In an eleventh aspect, an embodiment of the present disclosure provides a computer program, where when it runs on a computer, the computer is caused to perform the method as described in the optional implementations of the first aspect and the third aspect, and the second aspect and the third aspect.

In a twelfth aspect, an embodiment of the present disclosure provides a chip or a chip system. The chip or chip system includes processing circuitry configured to perform the method as described in the optional implementations of the above first aspect and second aspect.

It can be understood that the above terminal, network device, communication system, storage medium, program product, computer program, chip or chip system are all used to perform the method proposed in the embodiments of the present disclosure. Therefore, the beneficial effects that can be achieved can refer to the beneficial effects in the corresponding method, which will not be repeated here.

The embodiments of the present disclosure provide a method for determining power headroom report. In some embodiments, the method for determining power headroom report may be interchangeably used with terms such as information processing method, communication method, etc.

The embodiments of the present disclosure are not exhaustive, but merely illustrative of some embodiments, and are not intended to specifically limit the scope of the present disclosure. In case of no conflict, each step in a certain embodiment can be implemented as an independent embodiment, and the steps can be combined arbitrarily. For example, a solution obtained by removing some steps in a certain embodiment can also be implemented as an independent embodiment, and the order of the steps in a certain embodiment can be arbitrarily exchanged. In addition, the optional implementations in a certain embodiment can be arbitrarily combined. Furthermore, the embodiments can be arbitrarily combined. For example, some or all steps of different embodiments can be arbitrarily combined, and a certain embodiment can be arbitrarily combined with optional implementations of other embodiments.

In the various embodiments of the present disclosure, unless otherwise specified and unless there is a logical conflict, the terms and/or descriptions in the various embodiments are consistent and can be referenced mutually, and the technical features in different embodiments can be combined according to their inherent logical relationships to form new embodiments.

The terms used in the embodiments of the present disclosure are for the purpose of describing particular embodiments only and are not intended to limit the present disclosure.

In the embodiments of the present disclosure, unless otherwise stated, elements expressed in the singular, such as "a", "an", "the", "said", "above-mentioned", "aforementioned", "this", etc., may mean "one and only one", or may mean "one or more", "at least one", etc. For example, when using articles such as "a", "an", "the", etc. in translation, the noun following the article may be understood as singular or plural.

In the embodiments of the present disclosure, "a plurality of' means two or more.

In some embodiments, terms such as "at least one of', "one or more", "a plurality of', "multiple", etc. may be used interchangeably.

In some embodiments, expressions such as "at least one of A and B", "A and/or B", "in one case A, in another case B", "in response to one situation A, in response to another situation B", etc., may include the following technical solutions depending on the circumstances: in some embodiments A (executing A regardless of B); in some embodiments B (executing B regardless of A); in some embodiments selectively executing from A and B (A and B are selectively executed); in some embodiments A and B (both A and B are executed). When there are more branches such as A, B, C, etc., it is similar to the above.

In some embodiments, expressions such as "A or B", etc., may include the following technical solutions depending on the circumstances: in some embodiments A (executing A regardless of B); in some embodiments B (executing B regardless of A); in some embodiments selectively executing from A and B (A and B are selectively executed). When there are more branches such as A, B, C, etc., it is similar to the above.

The prefixes such as "first", "second", etc. in the embodiments of the present disclosure are only for distinguishing different described objects and do not constitute limitations on the position, order, priority, quantity, or content of the described objects. The description of the objects refers to the description in the claims or the context of the embodiments, and should not be construed as additional limitations due to the use of the prefixes. For example, if the described object is a "field", then the ordinal numbers before "field" in "first field" and "second field" do not limit the position or order between the "fields", and "first" and "second" do not limit whether the "fields" they modify are in the same message, nor do they limit the sequence of "first field" and "second field". For another example, if the described object is a "level", then the ordinal numbers before "level" in "first level" and "second level" do not limit the priority between the "levels". For another example, the quantity of the described object is not limited by the ordinal numbers, and can be one or more. Taking "first device" as an example, the quantity of the "device" can be one or more. In addition, objects modified by different prefixes may be the same or different. For example, if the described object is a "device", then "first device" and "second device" may be the same device or different devices, and their types may be the same or different. For another example, if the described object is "information", then "first information" and "second information" may be the same information or different information, and their contents may be the same or different.

In some embodiments, "include A", "contain A", "used to indicate A", "carry A", etc. may be interpreted as directly carrying A, or may be interpreted as indirectly indicating A.

In some embodiments, terms such as "in response to...", "in response to determining...", "in the case of...", "when...", "if...", etc. may be used interchangeably.

In some embodiments, terms such as "greater than", "greater than or equal to", "not less than", "more than", "more than or equal to", "not fewer than", "higher than", "higher than or equal to", "not lower than", "above", etc. may be used interchangeably. Terms such as "less than", "less than or equal to", "not greater than", "fewer than", "fewer than or equal to", "not more than", "lower than", "lower than or equal to", "not higher than", "below", etc. may be used interchangeably.

In some embodiments, apparatuses and devices may be interpreted as physical or virtual, and their names are not limited to those recorded in the embodiments. In some cases, they may also be understood as "equipment", "device", "circuit", "network element", "node", "function", "unit", "section", "system", "network", "chip", "chip system", "entity", "subject", etc.

In some embodiments, "network" may be interpreted as devices included in the network, such as access network devices, core network devices, etc.

In some embodiments, "access network device (AN device)" may also be referred to as "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier (CC)", "bandwidth part (BWP)", etc.

In some embodiments, "terminal" or "terminal device" may be referred to as "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc.

In some embodiments, obtaining data, information, etc. shall comply with the laws and regulations of the country where it is located.

In some embodiments, data, information, etc. may be obtained after obtaining user consent.

Furthermore, each element, each row, or each column in the tables of the embodiments of the present disclosure can be implemented as an independent embodiment. Any combination of elements, rows, or columns can also be implemented as an independent embodiment.

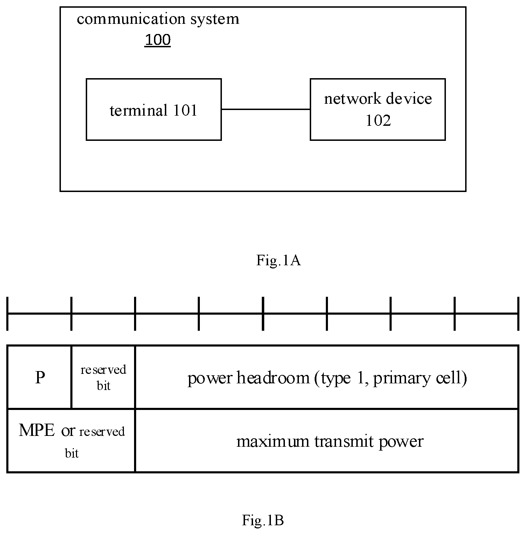

FIG. 1A is a schematic diagram of an architecture of a communication system according to an embodiment of the present disclosure.

As shown in FIG. 1A, the communication system 100 includes a terminal 101 and a network device 102.

In some embodiments, the terminal 101 includes, for example, a mobile phone, a wearable device, an Internet of Things device, a vehicle with communication functions, a smart vehicle, a tablet computer (Pad), a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, at least one of the above, but not limited thereto.

In some embodiments, the network device 102 may include at least one of an access network device and a core network device.

In some embodiments, an access network device is, for example, a node or device that connects a terminal to a wireless network. The access network device may include, for example, an evolved NodeB (eNB), a next generation evolved NodeB (ng-eNB), a next generation NodeB (gNB), a Node B (NB), a home Node B (HNB), a home evolved NodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in other communication systems, an access node in a Wi-Fi system, at least one of the above, but not limited thereto.

In some embodiments, the technical solutions of the present disclosure may be applicable to an Open RAN architecture. In this case, the interfaces between or within the access network devices involved in the embodiments of the present disclosure may become internal interfaces of the Open RAN, and the processes and information interaction between these internal interfaces may be implemented by software or programs.

In some embodiments, the access network device may be composed of a central unit (CU) and a distributed unit (DU), where the CU may also be called a control unit. Using the CU-DU structure, the protocol layers of the access network device can be split, with the functions of some protocol layers placed in the CU for centralized control, and the remaining part or all of the protocol layer functions distributed in the DUs, with the CU centrally controlling the DUs, but not limited thereto.

In some embodiments, the core network device may be one device, including one or more network elements, or may be multiple devices or device groups, respectively including all or part of the above one or more network elements. The network elements may be virtual or physical. The core network includes, for example, at least one of an Evolved Packet Core (EPC), a 5G Core Network (5GCN), and a Next Generation Core (NGC).

It can be understood that the communication system described in the embodiments of the present disclosure is to illustrate the technical solutions of the embodiments of the present disclosure more clearly, and does not constitute a limitation on the technical solutions proposed in the embodiments of the present disclosure. Those skilled in the art will understand that as the system architecture evolves and new business scenarios emerge, the technical solutions proposed in the embodiments of the present disclosure are equally applicable to similar technical problems.

The following embodiments of the present disclosure can be applied to the communication system 100 shown in FIG. 1A, or part of the entities, but are not limited thereto. The entities shown in FIG. 1A are illustrative. The communication system may include all or part of the entities in FIG. 1A, and may also include other entities not shown in FIG. 1A. The number and form of each entity are arbitrary. Each entity may be physical or virtual. The connection relationships between the entities are illustrative. The entities may not be connected or may be connected. The connections may be in any manner, may be direct or indirect, and may be wired or wireless.

The various embodiments of the present disclosure can be applied to Long Term Evolution (LTE), LTE-Advanced (LTE-A), LTE-Beyond (LTE-B), SUPER 3G, IMT-Advanced, the fourth generation mobile communication system (4G), the fifth generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), systems using other communication methods, next-generation systems based on them, etc. In addition, multiple systems may be combined (e.g., a combination of LTE or LTE-A and 5G) for application.

In some embodiments, due to higher-order modulation and transmission bandwidth configuration, the terminal is allowed to reduce its maximum transmit power. For example, for terminals with power class PC2 and PC3, Tables 1 and 2 define the allowed maximum power reduction (MPR) for channel bandwidths meeting the following two criteria, respectively.

Table 1

| Modulation | | MPR (dB) | | |
|---|---|---|---|---|
| | | Edge RB allocations | Outer RB allocations | Inner RB allocations |
| DFT-s-OFDM | Pi/2 BPSK | ≤ 3.5[1] | ≤ 1.2[1] | ≤ 0.2[1] |
| | | ≤ 0.5[2] | ≤ 0.5[2] | 0[2] |
| | QPSK | ≤ 1 | | 0 |
| | 16 QAM | ≤ 2 | | ≤ 1 |
| | 64 QAM | ≤ 2.5 | | |
| | 256 QAM | ≤ 4.5 | | |
| CP-OFDM | 16 QAM | ≤ 3 | | ≤ 1.5 |
| | 64 QAM | ≤ 3 | | ≤ 2 |
| | 256 QAM | ≤ 3.5 | | |
| | Pi/2 BPSK | ≤ 6.5 | | |
| Note 1: Applicable to terminals operating in TDD mode with Pi/2 BPSK modulation, where the terminal indicates support for the terminal capability powerBoosting-pi2BPSK, and if the IE powerBoost Pi/2 BPSK is set to 1, and 40% or fewer slots in a radio frame are used for UL transmission in bands n40, n41, n77, n78, and n79. The reference power for 0 dB MPR is 26 dBm. | | | | |
| Note 2: Applicable to UEs operating in FDD mode or TDD mode with Pi/2 BPSK modulation in bands other than n40, n41, n77, n78, and n79, and if the IE powerBoost Pi2BPSK is set to 0, and if more than 40% of slots in a radio frame are used for UL transmission in bands n40, n41, n77, n78, and n79. | | | | |

Table 2

| Modulation | | MPR (dB) | | |
|---|---|---|---|---|
| | | Edge RB allocations | Outer RB allocations | Inner RB allocations |
| DFT-s-OFDM | Pi/2 BPSK | ≤ 3.5 | ≤ 0.5 | 0 |
| | QPSK | ≤ 3.5 | ≤ 1 | 0 |
| | 16 QAM | ≤ 3.5 | ≤ 2 | ≤ 1 |
| | 64 QAM | ≤ 3.5 | ≤ 2.5 | |
| | 256 QAM | ≤ 4.5 | | |
| CP-OFDM) | QPSK | ≤ 3.5 | ≤ 3 | ≤ 1.5 |
| | 16 QAM | ≤ 3.5 | ≤ 3 | ≤ 2 |
| | 64 QAM | ≤ 3.5 | | |
| | 256 QAM | ≤ 6.5 | | |

In some embodiments, additional emission requirements may be notified to the terminal via network signaling. Each additional emission requirement is associated with a unique network signal (NS) value, which is indicated in radio resource control (RRC) signaling by the applicable operating frequency band's NR band number and an associated value in a field. For example, the applicable operating frequency band's NR band number and the associated value in the field could be "additional spectrum emission".

Illustratively, to meet additional requirements, an additional maximum power reduction (A-MPR) is allowed on the maximum transmit power specified in Table 1 or Table 2. Unless otherwise specified, the total reduction in the terminal's maximum transmit power is the maximum of MPR and A-MPR. Here, MPR is as shown in Tables 1 and 2.

In some embodiments, the terminal is allowed to set its configured maximum transmit power $P_{CMAX,f,c}$ for the carrier of a serving cell per slot.

Optionally, the value of $P_{CMAX,f,c}$ lies between $P_{CMAX\_L,f,c}$ and $P_{CMAX\_H,f,c}$. That is, $P_{CMAX\_L,f,c} \leq P_{CMAX,f,c} \leq P_{CMAX\_H,f,c}$, where $P_{CMAX,f,c}$ is the maximum transmit power, $P_{CMAX\_L,f,c}$ is the low value of the maximum transmit power, and $P_{CMAX\_H,f,c}$ is the high value of the maximum transmit power.

Optionally, $P_{CMAX\_L,f,c}$ is determined based on the following method:

$$P_{CMAX\_L,f,c} = MIN\left\{ P_{EMAX,c} - \Delta T_{C,c} \left( P_{PowerClass} - \Delta P_{PowerClass} \right) - MAX\left( MAX\left( MPR_c + \Delta MPR_c, A - MPR_c \right) + \Delta T_{IB,c} + \Delta T_{C,c} + \Delta T_{RxSRS}, P - MPR_c \right) \right\}$$

where $f$ represents the carrier frequency, c represents the serving cell, $P_{EMAX,c}$ represents the maximum allowed power configured by the network device, $P_{PowerClass}$ represents the terminal defined power without considering other non-ideal factor tolerances, $\Delta P_{PowerClass}$ represents the terminal maximum power reduction or power back-off value based on duty cycle configuration to ensure RF exposure compliance, $MPR_c$ represents the maximum power reduction due to modulation and transmission bandwidth configuration factors, $A\text{-}MPR_c$ represents the additional power back-off notified by network signaling to ensure relevant radiation requirements for different operating frequency bands, $\Delta T_{IB,c}$ represents the additional power reduction value in multi-carrier scenarios, $\Delta T_{C,c}$ represents the additional power reduction value corresponding to transmissions with special edge configurations, $\Delta T_{RxSRS}$ represents the terminal power adjustment value related to SRS antenna switching, and $P\text{-}MPR_c$ represents the power management maximum power reduction.

Optionally, $P_{CMAX\_H,f,c}$ is determined based on the following method: $P_{CMAX\_H,f,c} = MIN\{P_{EMAX,c}, P_{PowerClass} - \Delta P_{PowerClass}\}$.

In the embodiments of the present disclosure, considering that the terminal's transmit power may change based on terminal implementation, and these operations are transparent to the network device. Therefore, the terminal can report the instantaneous transmit power for transmitting the physical uplink shared channel (PUSCH) to the network device. For example, it is reported to the network device via a power headroom report (PHR). The PHR may include power headroom (PH), the maximum transmit power P_CMAX,f,c, and power management maximum power reduction (P-MPR). Here, the power headroom reflects the amount of additional transmit power that the terminal can transmit with reference to the current PUSCH power level, while P_CMAX,f,c reflects the maximum power that the terminal can transmit under those conditions.

Currently, the protocol stipulates that P-MPR is only used for FR2 frequency bands. That is, only in FR2 frequency bands does the PHR sent by the terminal include the MPR determined based on MPE requirements, while in FR1 frequency bands, the PHR sent by the terminal does not include the MPR determined based on SAR requirements.

Currently, the PHR reported by the terminal includes a PHR based on a single carrier and a PHR based on multiple carriers.

FIG. 1B shows the PHR configuration format for a single carrier, mainly including a P information field, an R information field, an MPE information field, a PH information field, and a P_CMAX,f,c information field.

where the P information field is used to indicate whether there is MPR reporting based on MPE requirements;

the R information field is a reserved information field, mainly used to record corresponding newly added data when needed;

the MPE information field is used to indicate the MPR value based on MPE requirements when the P information field indicates that there is MPR reporting based on MPE requirements;

the PH informatiopn field is used to indicate the transmit power headroom that the terminal can transmit when accessing the primary cell under type 1 (PUSCH).

the P_CMAX,f,c information field is used to indicate the maximum transmit power that the terminal can transmit.

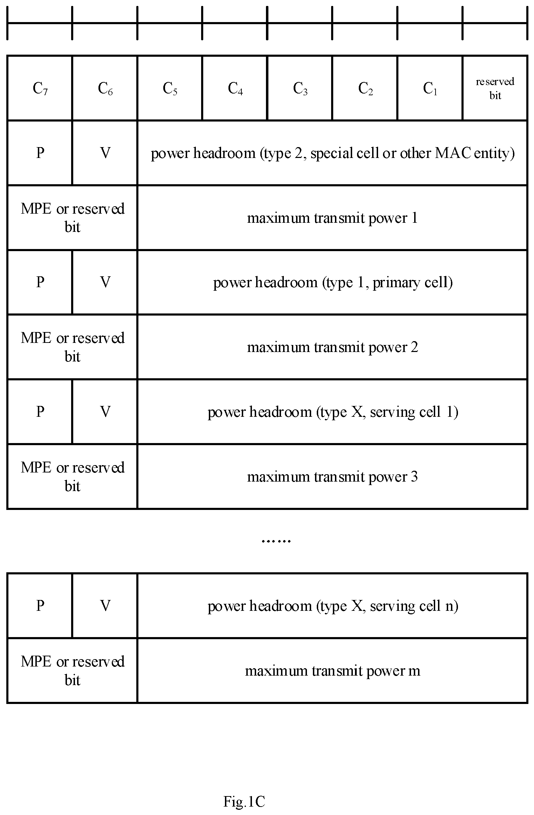

FIG. 1C shows the PHR configuration format in a multi-carrier scenario. Here, C1 to C7 can be used to indicate different carriers. It can be understood that the multi-carrier PHR can be viewed as a combination of multiple single-carrier PHRs. Type 2 can correspond to a physical uplink control channel (PUCCH). A special cell (SpCell) can include a PCell and a primary secondary cell (PSCell). A serving cell may be a PCell or a secondary cell (SCell), or a PSCell, or an SpCell, etc.

In the embodiments of the present disclosure, uplink coverage has always been one of the bottlenecks of system performance, affecting signal quality and user experience. There is a strong demand for uplink coverage enhancement, including from operators. Currently, in NR, two uplink waveforms are supported: cyclic prefix orthogonal frequency division multiplexing (CP-OFDM) waveform and discrete Fourier transform spread orthogonal frequency division multiplexing (DFTS-OFDM) waveform.

Compared with the CP-OFDM waveform, the peak-to-average power ratio (PAPR) under the DFTS-OFDM waveform is about 3 dB lower than that of CP-OFDM. The DFTS-OFDM waveform, due to its lower PAPR, is more suitable for scenarios with limited uplink coverage. For example, for cell-edge users, especially in Frequency Range 2 (FR2), the uplink coverage problem of the CP-OFDM waveform is more prominent.

In the related art, the CP-OFDM waveform or DFTS-OFDM waveform used by the terminal for uplink transmission is semi-statically configured via radio resource control (RRC) signaling. The waveform for the terminal's uplink transmission is configured through the "transformPrecoder" parameter in the physical uplink shared channel (PUSCH) configuration parameters. If "transformPrecoder" is configured as "enable", it indicates that the waveform for the terminal's uplink transmission is the DFTS-OFDM waveform. If "transformPrecoder" is configured as "disable", it indicates that the waveform for the terminal's uplink transmission is the CP-OFDM waveform.

In some embodiments of the present disclosure, 1 bit is added in downlink control information (DCI) to indicate the waveform used by the terminal to transmit the PUSCH. To support dynamic switching of uplink waveforms, the terminal needs to enhance related reporting information to support the network device's scheduling decisions for waveforms.

Based on this, the embodiments of the present disclosure provide a method for determining power headroom report. By reporting power headroom information corresponding to different waveforms in one PHR, the terminal enables the network device to determine scheduling decisions for waveforms based on the power headroom information corresponding to different waveforms reported by the terminal, thereby improving scheduling efficiency.

The PHR involved in the embodiments of the present disclosure is a type 1 PHR, which targets PUSCH transmission. This will not be repeated in the following embodiments of the present disclosure.

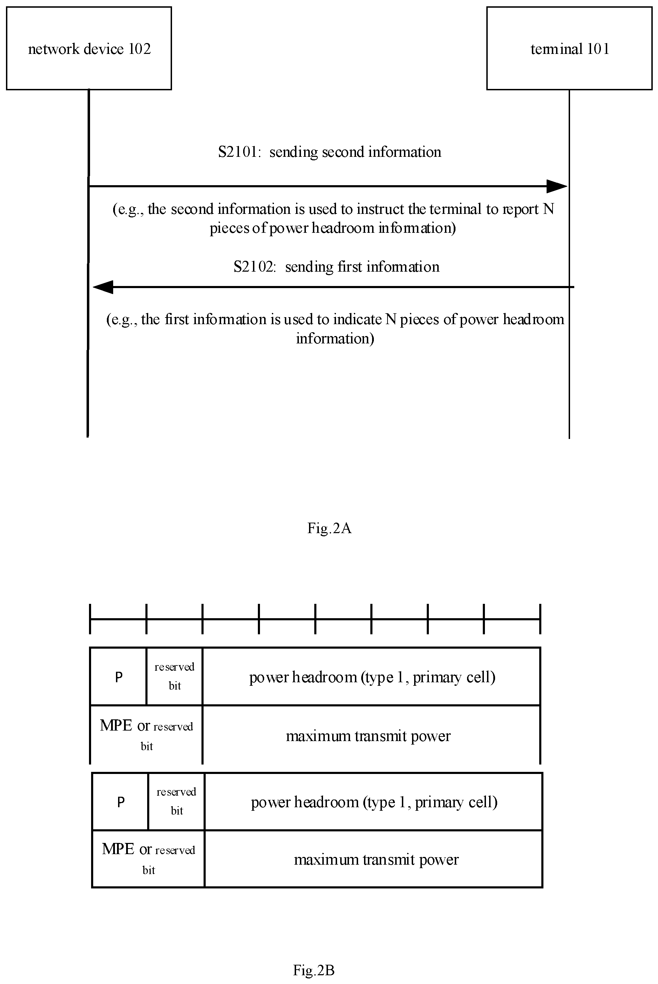

FIG. 2A is an interaction diagram of a method for determining power headroom report according to an embodiment of the present disclosure. As shown in FIG. 2A, the embodiment relates to a method for determining power headroom report. The method includes:

Step S2101: the network device 102 sending second information to the terminal 101.

In some embodiments, the terminal 101 receives the second information.

In some embodiments, the second information is used to instruct the terminal to report N pieces of power headroom information, where N is an integer greater than 1.

Optionally, the power headroom information includes power headroom and configured maximum transmit power. Optionally, the power headroom information may also be called PHR.

In some embodiments, the second information is used to instruct the terminal to simultaneously report N pieces of power headroom information in one PHR report. Optionally, the terminal sends one PHR to the network device, but the one PHR includes N pieces of power headroom information.

Optionally, each of the N pieces of power headroom information corresponds to an uplink transmission waveform. For example, if the second information instructs the terminal to report 2 pieces of power headroom information, then one piece of power headroom information corresponds to the CP-OFDM waveform, and the other piece corresponds to the DFT-s-OFDM waveform.

In some embodiments, the second information is used to instruct the terminal to report N pieces of power headroom information corresponding to N waveforms. Optionally, there is a one-to-one correspondence between waveforms and power headroom information.

In some embodiments, the second information is used to configure the terminal to simultaneously report power headroom information for 2 waveforms in one PHR report.

In some embodiments, the name of the second information is not limited. For example, it is "configuration information" or "configuration signaling".

In some embodiments, the second information is carried in RRC signaling.

In some embodiments, the second information is carried in redefined RRC signaling or new RRC signaling.

In one implementation, the second information instructs the terminal to report 2 pieces of power headroom information. Then, a new twoPHRMode, such as twoPHRMode-R18 signaling, is designed to support the terminal in reporting 2 pieces of power headroom information.

Optionally, an example of RRC signaling configuration is as follows:

```
PHR-Config ::=                    SEQUENCE {
    phr-PeriodicTimer                   ENUMERATED {sf10, sf20, sf50,
sf100, sf200,sf500, sf1000, infinity},
    phr-ProhibitTimer                   ENUMERATED {sf0, sf10, sf20, sf50,
sf100,sf200, sf500, sf1000},
    phr-Tx-PowerFactorChange            ENUMERATED {dB1, dB3, dB6,
infinity},
    multiplePHR                      BOOLEAN,
    dummy                            BOOLEAN,
    phr-Type2OtherCell               BOOLEAN,
    phr-ModeOtherCG                  ENUMERATED {real, virtual},
```

```
...,
[[
mpe-Reporting-FR2-r16                    SetupRelease{MPE-Config-FR2-r16}
OPTIONAL      -- Need M
]],
[[
mpe-Reporting-FR2-r17                    SetupRelease{MPE-Config-FR2-r17}
OPTIONAL,        -- Need M
     twoPHRMode-r17                           ENUMERATED{enabled}
OPTIONAL         -- Need R
     twoPHRMode-r18                       ENUMERATED{enabled}
OPTIONAL        -- Need R
     ]]
}
```

where the terminal is configured to report 2 pieces of power headroom information via the twoPHRMode-r18 signaling.

In another implementation, the second information instructs the terminal to report multiple pieces of power headroom information. Then, the multiple PHR parameters in the RRC signaling is enabled via configuration, or a new multiplePHR-R18 parameter is defined, to instruct the terminal to report multiple pieces of power headroom information.

Optionally, an example of RRC signaling configuration is as follows:

```
PHR-Config ::=                           SEQUENCE {
     phr-PeriodicTimer
ENUMERATED{sf10,sf20,sf50,sf100,sf200,sf500,sf1000, infinity},
     phr-ProhibitTimer                    ENUMERATED {sf0, sf10, sf20, sf50,
sf100,sf200, sf500, sf1000},
     phr-Tx-PowerFactorChange             ENUMERATED {dB1,dB3,dB6,infinity},
     multiplePHR                          BOOLEAN,
     multiplePHR_r18                      BOOLEAN
     dummy                                BOOLEAN,
     phr-Type2OtherCell                   BOOLEAN,
     phr-ModeOtherCG                      ENUMERATED {real, virtual},
     ...,
     [[
mpe-Reporting-FR2-r16                     SetupRelease { MPE-Config-FR2-r16 }
OPTIONAL        -- Need M
     ]],
     [[
mpe-Reporting-FR2-r17                     SetupRelease { MPE-Config-FR2-r17 }
OPTIONAL,       -- Need M
```

twoPHRMode-r17         ENUMERATED {enabled}

OPTIONAL     -- Need R

twoPHRMode-r18         ENUMERATED {enabled}

OPTIONAL     -- Need R

]]

}

where the terminal is configured to report multiple pieces of power headroom information via the multiplePHR_r18 signaling, and the twoPHRMode-r18 is enabled simultaneously.

Step S2102: the terminal 101 sending first information to the network device 102.

In some embodiments, the network device 102 receives the first information.

In some embodiments, the first information is used to indicate 1 or N pieces of power headroom information. Optionally, the 1 or N pieces of power headroom information are carried in one PHR. That is to say, the terminal triggers one PHR report and reports 1 or N pieces of power headroom information in this PHR report. Optionally, the power headroom information includes PH and configured maximum transmit power. In some embodiments, the power headroom information may also be called PHR. That is, the terminal reports one or more PHRs in one PHR report.

In some embodiments, the first information is used to indicate power headroom information corresponding to 1 or N waveforms. Optionally, 1 waveform corresponds to 1 piece of power headroom information. Optionally, N waveforms correspond to N pieces of power headroom information. For example, the first information is used to indicate power headroom information corresponding to the CP-OFDM waveform and power headroom information corresponding to the DFT-s-OFDM waveform.

In some embodiments, the first information is used to indicate the 1 or N pieces of power headroom information reported by the terminal in one PHR report.

In some embodiments, the first information is used to indicate the power headroom information of 1 or N waveforms reported by the terminal in one PHR report.

The following describes how the terminal determines to report N pieces of power headroom information and how the N pieces of power headroom information are determined.

In some embodiments, the terminal receives the second information sent by the network device, and the second information instructs the terminal to report N pieces of power headroom information. Then the terminal determines to report N pieces of power headroom information, that is, the first information is used to indicate N pieces of power headroom information.

Optionally, the N pieces of power headroom information correspond to N waveforms.

In some embodiments, the N pieces of power headroom information are determined based on at least one of:

    a currently transmitted PUSCH;
    a reference PUSCH configured by a network device;
    a last transmitted PUSCH within a time window.

Optionally, the currently transmitted PUSCH represents a PUSCH that the terminal is currently transmitting.

Optionally, the reference PUSCHs configured by the network device are configured based on different uplink transmission waveforms respectively.

Optionally, the last transmitted PUSCH within the time window indicates that the terminal is not currently transmitting a PUSCH at the current moment, but there has been a PUSCH transmission within a period of time. Optionally, the PUSCH transmitted within the time window includes DG PUSCH and CG PUSCH.

It is worth noting that the power headroom information involved in the embodiments of the present disclosure is determined based on the PUSCH, meaning that the terminal determines the power headroom information based on power parameters of the PUSCH. The power parameters are, for example, maximum transmit power, actual transmit power. For example, PH is determined based on the difference between the maximum transmit power and the actual transmit power.

Method 1: If the currently transmitted PUSCH and the PUSCH carrying the power headroom information report satisfy a time requirement, then the N pieces of power headroom information are determined based on the currently transmitted PUSCH.

For example, if the currently transmitted PUSCH and the PUSCH carrying the power headroom information report are in the same slot, then the N pieces of power headroom information are determined based on the currently transmitted PUSCH.

Optionally, the N pieces of power headroom information include: first power headroom information and second power headroom information.

Optionally, the first power headroom information is actual power headroom information determined based on the uplink transmission waveform used in the currently transmitted PUSCH. Optionally, the actual power headroom information may also be called an actual PHR. Optionally, the actual PHR indicates that the terminal has performed a real physical channel transmission. The actual PHR is determined by the difference between the maximum transmit power and the transmit power of the actually transmitted PUSCH, and the actual power headroom information is sent to the network device, i.e., actual PHR.

Optionally, the second power headroom information is virtual power headroom information determined based on a target waveform. Optionally, the virtual power headroom information may also be called a virtual PHR.

Optionally, the target waveform represents the waveform to which the terminal is to switch for a PUSCH transmission. For example, if the waveform used by the terminal for the currently transmitted PUSCH is the CP-OFDM waveform, then the target waveform is the DFT-s-OFDM waveform.

Optionally, the virtual PH indicates that the terminal calculates a virtual PH based on the target waveform using the currently transmitted PUSCH. When the terminal switches to the target waveform for PUSCH transmission, the terminal's actual PH and the virtual PH are not necessarily the same.

Method 2: If the currently transmitted PUSCH and the PUSCH carrying the power headroom information report do not satisfy a time requirement, or if the terminal is not currently transmitting a PUSCH, then the N pieces of power headroom information are determined based on reference PUSCHs. Optionally, the reference PUSCHs are configured based on different uplink transmission waveforms respectively.

Optionally, if the terminal does not have a real PUSCH transmission, it reports the PH after a reference (or virtual) transmission of the PUSCH. For example, if there is no PUSCH transmission, the terminal calculates a piece of power headroom information for the network device according to a predefined PUSCH format, i.e., virtual PHR.

Optionally, N virtual PHs are calculated and determined under N waveforms based on the reference PUSCH. For example, one virtual PH is calculated under the DFT-s-OFDM waveform based on the reference PUSCH, and one virtual PH is calculated under the CP-OFDM waveform based on the reference PUSCH.

Method 3: If there is a transmitted PUSCH within a time window, the last transmitted PUSCH within the time window is used as the reference PUSCH, and N virtual pieces of power headroom information are calculated and determined under N waveforms based on the last transmitted PUSCH within the time window.

Method 4: The N pieces of power headroom information are virtual power headroom information determined based on different uplink transmission waveform configurations of a currently transmitted PUSCH.

Optionally, when calculating virtual power headroom information, parameters under the actual PUSCH scheduling configuration can be used for determination.

In some embodiments, the N pieces of power headroom information indicated by the first information include the configured maximum transmit power.

Optionally, the configured maximum transmit power is determined based on MPR, P-MPR, and A-MPR.

Optionally, the low value of the maximum transmit power is determined based on the following method:

$$P_{CMAX\_L,f,c} = MIN\Big\{P_{EMAX,c} - \Delta T_{C,c}\big(P_{PowerClass} - \Delta P_{PowerClass}\big) - MAX\big(MAX(MPR_c + \Delta MPR_c, A - MPR_c) + \Delta T_{IB,c} + \Delta T_{C,c} + \Delta T_{RxSRS}, P - MPR_c\big)\Big\}$$

Optionally, the high value of the maximum transmit power is determined based on the following method:

$$P_{CMAX\_H,f,c} = MIN\Big\{P_{EMAX,c}, P_{PowerClass} - \Delta P_{PowerClass}\Big\}$$

where $f$ represents the carrier frequency, c represents the serving cell, $P_{EMAX,c}$ represents the maximum allowed power configured by the network device, $P_{PowerClass}$ represents the terminal defined power without considering other non-ideal factor tolerances, $\Delta P_{PowerClass}$ represents the terminal maximum power reduction or power back-off value based on duty cycle configuration to ensure RF exposure compliance, $MPR_c$ represents the maximum power reduction due to modulation and transmission bandwidth configuration factors, $A\text{-}MPR_c$ represents the additional power back-off notified by network signaling to ensure relevant radiation requirements for different operating frequency bands, $\Delta T_{IB,c}$ represents the additional power reduction value in multi-carrier scenarios, $\Delta T_{C,c}$ represents the additional power reduction value corresponding to transmissions with special edge configurations, $\Delta T_{RxSRS}$ represents the terminal power adjustment value related to SRS antenna switching, and $P\text{-}MPR_c$ represents the power management maximum power reduction.

Optionally, the actual maximum transmit power of the terminal lies between the low value and the high value of the maximum transmit power and is determined autonomously by the terminal.

In some embodiments, when calculating power headroom information for the DFT-s-OFDM waveform, a reasonable default/reference frequency domain resource allocation (FDRA) configuration needs to be used. Optionally, the default/reference FDRA is a contiguous FDRA allocation.

Optionally, if the first FDRA of the PUSCH for the CP-OFDM waveform is configured as contiguous, the power headroom information for the DFT-s-OFDM waveform is calculated based on a second FDRA. Optionally, the second FDRA is the same as the first FDRA. Optionally, the second FDRA is determined based on a pre-configuration, and the second FDRA is a contiguous frequency domain resource allocation.

Optionally, if the first FDRA of the PUSCH for the CP-OFDM waveform is configured as non-contiguous, the power headroom information for the DFT-s-OFDM waveform is calculated based on a second FDRA. Optionally, the second FDRA is determined based on the first FDRA, and the second FDRA is a contiguous frequency domain resource allocation, i.e., the first FDRA is equivalently converted into a contiguous second FDRA. Optionally, the second FDRA is determined based on a pre-configuration, and the second FDRA is a contiguous frequency domain resource allocation.

In some embodiments, the first information includes N pieces of power headroom information. Optionally, the current Enhanced Single Entry PHR for multiple TRP MAC CE cannot support reporting of multiple pieces of power headroom information. Therefore, it is necessary to redesign the MAC-CE that carries multiple pieces of power headroom information.

Optionally, the first information is carried in a redefined MAC-CE or a newly added MAC-CE.

In one implementation, if the terminal reports 2 pieces of power headroom information in one PHR report, the format of the MAC-CE carrying the PHR is as shown in FIG. 2B. One PHR report includes two pieces of power headroom information corresponding to different transmission waveforms, i.e., one PHR report includes two power headroom PHs and two maximum transmit powers P_CMAX.

In one implementation, the terminal performs PHR reporting in a CA/DC scenario. Optionally, the format of one PHR report per carrier in the CA/DC scenario is as shown in FIG. 2B.

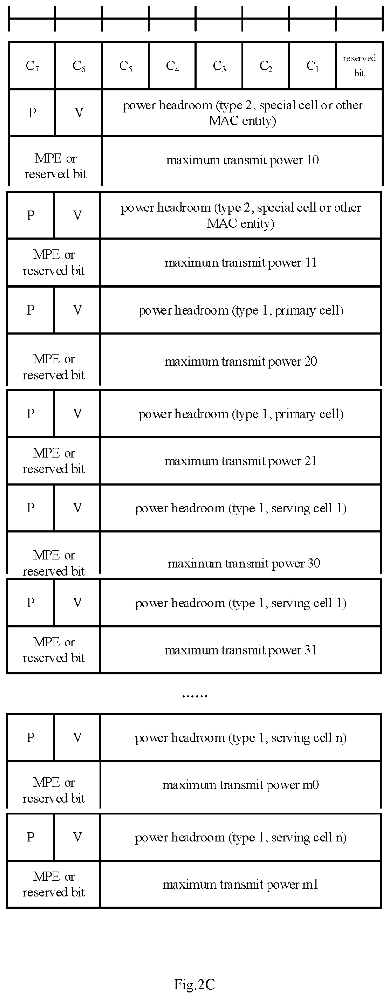

Optionally, the format of the MAC-CE carrying multi-carrier PHR reports in the CA/DC scenario is as shown in FIG. 2C: One PHR report reports two pieces of power headroom information for different transmission waveforms of multiple carriers, i.e., one PHR report includes two power headroom PHs and two maximum transmit powers P_CMAX corresponding to each of the multiple carriers. Here, the power headroom information of special cells or other MAC entities is reported via type 2 PHR.

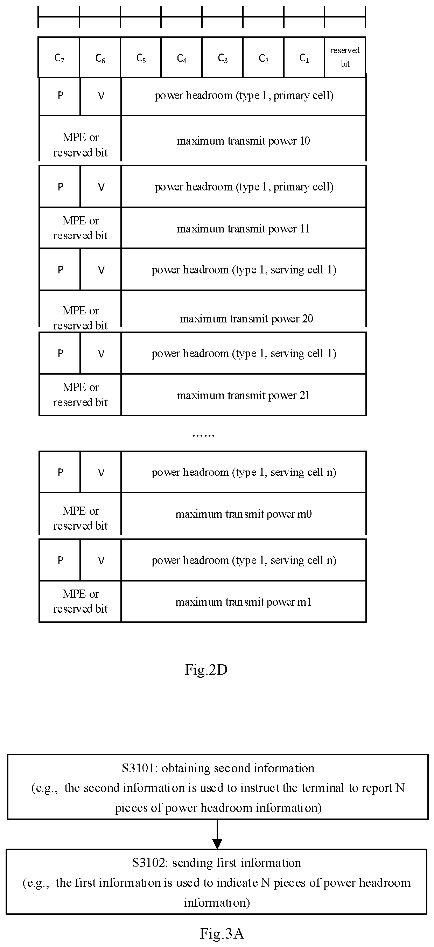

Optionally, the format of the MAC-CE carrying multi-carrier PHR reports in the CA/DC scenario is as shown in FIG. 2D: One PHR report reports two pieces of power headroom information for different transmission waveforms of multiple carriers, i.e., one PHR report includes two power headroom PHs and two maximum transmit powers P_CMAX corresponding to each of the multiple carriers. Here, the power headroom information of each carrier is reported via type 1 PHR.

The following describes how the terminal determines to report 1 piece of power headroom information and how that 1 piece of power headroom information is determined.

In some embodiments, the terminal 101 receives the second information, but the second information is not enabled. Then the first information includes 1 piece of power headroom information.

In some embodiments, the terminal 101 does not receive the second information. Then the first information includes 1 piece of power headroom information.

In some embodiments, the uplink transmission waveform corresponding to the 1 piece of power headroom information is determined by methods such as predefinition or RRC signaling configuration.

Method 1: The uplink transmission waveform corresponding to the 1 piece of power headroom information is a target waveform.

Optionally, the first information includes power headroom information of the target waveform. For example, if the terminal is currently transmitting PUSCH under the CP-OFDM waveform, and the target waveform is the DFT-s-OFDM waveform, then the first information includes power headroom information corresponding to the DFT-s-OFDM waveform.

Optionally, the terminal sends the first information before receiving a first command.

Optionally, the first command is used to instruct the terminal to perform a switching of an uplink transmission waveform. For example, if the waveform currently used by the terminal for PUSCH transmission is the CP-OFDM waveform, then the first command is used to instruct the terminal to switch to the DFT-s-OFDM waveform.

Optionally, the first command is a Dynamic WaveShaping (DWS) signaling.

Optionally, the first command is carried in RRC, MAC-CE, or DCI.

Optionally, the terminal sends the first information before waveform switching.

Method 2: The uplink transmission waveform corresponding to the 1 piece of power headroom information is the waveform actually used by the terminal for transmitting the PUSCH.

Optionally, the first information includes power headroom information of the current waveform actually used by the terminal for transmitting the PUSCH. For example, if the terminal is currently transmitting PUSCH under the CP-OFDM waveform, then the first information includes power headroom information corresponding to the CP-OFDM waveform.

Optionally, the terminal sends the first information after receiving the first command.

Optionally, the trigger timing for the terminal to send the first information is the DWS switching.

In some embodiments, the terminal reports 1 piece of power headroom information in one PHR report. The format of the MAC-CE carrying this PHR report is as shown in FIG. 1B: One PHR report reports 1 piece of power headroom information for one transmission waveform, i.e., one PHR report includes 1 power headroom PH and 1 maximum transmit power P_CMAX.

The communication method involved in the embodiments of the present disclosure may include at least one of steps S2101 to S2102. For example, step S2101 may be implemented as an independent embodiment, and step S2102 may be implemented as an independent embodiment, but it is not limited thereto.

In some embodiments, step S2101 is optional. In different embodiments, one or more of these steps may be omitted or substituted.

In some embodiments, step S2102 is optional. In different embodiments, one or more of these steps may be omitted or substituted.

In some embodiments, other optional implementations recorded before or after the description corresponding to FIG. 2 may be referred to.

FIG. 3A is a flowchart of a method for determining power headroom report according to an embodiment of the present disclosure. As shown in FIG. 3A, the embodiment relates to a method for determining power headroom report. The method includes:

Step S3101: obtaining second information.

Optional implementations of step S3101 can refer to the optional implementations of step S2101 in FIG. 2 and other related parts in the embodiments involved in FIG. 2, which will not be repeated here.

In some embodiments, the second information is used to instruct the terminal to report N pieces of power headroom information.

In some embodiments, the terminal 101 receives the second information sent by the network device 102, but is not limited thereto, and may also receive the second information sent by other entities.

In some embodiments, the terminal 101 obtains the second information specified by the protocol.

In some embodiments, the terminal 101 obtains the second information from upper layer(s).

In some embodiments, the terminal 101 performs processing to obtain the second information.

In some embodiments, step S3101 is omitted, and the terminal 101 autonomously implements the function indicated by the second information, or the function is default.

Step S3102: sending first information.

Optional implementations of step S3102 can refer to the optional implementations of step S2102 in FIG. 2 and other related parts in the embodiments involved in FIG. 2, which will not be repeated here.

In some embodiments, the first information is used to indicate N pieces of power headroom information.

In some embodiments, the terminal 101 sends the first information to the network device 102, but is not limited thereto, and may also send the first information to other entities.

The communication method involved in the embodiments of the present disclosure may include at least one of steps S3101 to S3102. For example, step S3101 may be implemented as an independent embodiment, and step S3102 may be implemented as an independent embodiment.

In some embodiments, step S3101 is optional. In different embodiments, one or more of these steps may be omitted or substituted.

In some embodiments, step S3102 is optional. In different embodiments, one or more of these steps may be omitted or substituted.

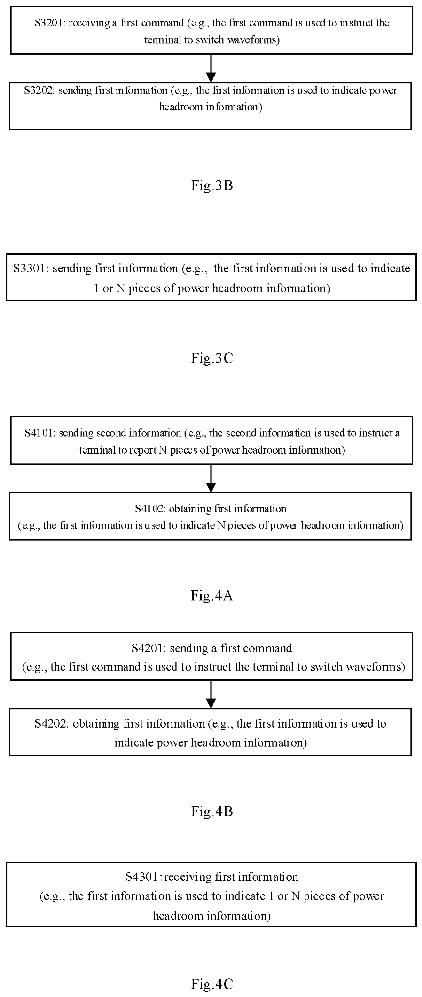

FIG. 3B is a flowchart of a method for determining power headroom report according to an embodiment of the present disclosure. As shown in FIG. 3B, the embodiment relates to a method for determining power headroom report. The method includes:

Step S3201: receiving a first command.

Optional implementations of step S3201 can refer to the optional implementations of step S2102 in FIG. 2 and other related parts in the embodiments involved in FIG. 2, which will not be repeated here.

In some embodiments, the first command is used to instruct the terminal to switch waveforms.

Step S3202: sending first information.

Optional implementations of step S3202 can refer to the optional implementations of step S2102 in FIG. 2, step S3102 in FIG. 3A, and other related parts in the embodiments involved in FIG. 2 and FIG. 3A, which will not be repeated here.

In some embodiments, the first information is used to indicate power headroom information corresponding to a target waveform; or the first information is used to indicate power headroom information corresponding to the waveform used for the currently transmitted PUSCH.

The communication method involved in the embodiments of the present disclosure may include at least one of steps S3201 to S3202. For example, step S3201 may be implemented as an independent embodiment, and step S3202 may be implemented as an independent embodiment, but it is not limited thereto.

In some embodiments, the order of steps S3201 and S3202 may be exchanged.

In some embodiments, step S3201 is optional. In different embodiments, one or more of these steps may be omitted or substituted.

In some embodiments, step S3202 is optional. In different embodiments, one or more of these steps may be omitted or substituted.

FIG. 3C is a flowchart of a method for determining power headroom report according to an embodiment of the present disclosure. As shown in FIG. 3C, the embodiment relates to a method for determining power headroom report. The method includes:

Step S3301: sending first information.

Optional implementations of step S3301 can refer to the optional implementations of step S2102 in FIG. 2, step S3102 in FIG. 3A, step S3202 in FIG. 3B, and other related parts in the embodiments involved in FIG. 2, FIG. 3A, and FIG. 3B, which will not be repeated here.

In some embodiments, the first information is used to indicate 1 or N pieces of power headroom information, the 1 or N pieces of power headroom information are carried in one power headroom report PHR, the type of the PHR is type 1, and N is an integer greater than 1; where the power headroom information at least includes PH and a configured maximum transmit power, different pieces of power headroom information correspond to different uplink transmission waveforms, and the uplink transmission waveforms are used to transmit a PUSCH.

In some embodiments, second information is received, where the second information is used to instruct the terminal to report N pieces of power headroom information, and the N pieces of power headroom information correspond to N uplink transmission waveforms.

In some embodiments, the N pieces of power headroom information are determined based on at least one of: a currently transmitted PUSCH; a reference PUSCH configured by a network device; a last transmitted PUSCH within a time window.

In some embodiments, where a currently transmitted PUSCH and a PUSCH carrying the power headroom information report satisfy a time requirement, the N pieces of power headroom information are determined based on the currently transmitted PUSCH; the N pieces of power headroom information include: first power headroom information, where the first power headroom information includes an actual PH determined based on an uplink transmission waveform used in the currently transmitted PUSCH; second power headroom information, where the second power headroom information is virtual power headroom information determined based on a target waveform; and the target waveform is a waveform to which the terminal is to switch for a PUSCH transmission.

In some embodiments, where a currently transmitted PUSCH and a PUSCH carrying the power headroom information report do not satisfy a time requirement, or where the terminal is not currently transmitting a PUSCH, the N pieces of power headroom information are determined based on reference PUSCHs; the N pieces of power headroom information are virtual power headroom information determined based on different waveform configurations of the reference PUSCHs.

In some embodiments, the N pieces of power headroom information are virtual power headroom information determined based on different uplink transmission waveform configurations of a currently transmitted PUSCH.

In some embodiments, in a case where a PUSCH transmission exists within a time window, a reference PUSCH is a last transmitted PUSCH within the time window.

In some embodiments, the maximum transmit power is determined based on a maximum power reduction (MPR), a power management maximum power reduction (P-MPR), and an additional maximum power reduction (A-MPR) of the terminal.

In some embodiments, the uplink transmission waveforms are discrete Fourier transform spread orthogonal frequency division multiplexing (DFT-s-OFDM) waveforms, and power headroom information corresponding to the DFT-s-OFDM waveforms is determined based on a contiguous frequency domain resource allocation (FDRA).

In some embodiments, the uplink transmission waveforms are cyclic prefix orthogonal frequency division multiplexing (CP-OFDM) waveforms, a first FDRA corresponding to the CP-OFDM waveforms is contiguous or non-contiguous, and power headroom information corresponding to DFT-s-OFDM waveforms is determined based on a second FDRA; the second FDRA is determined based on the first FDRA, and the second FDRA is a contiguous FDRA.

In some embodiments, the second information is not enabled or the second information is not configured, and the first information includes one piece of power headroom information.

In some embodiments, an uplink transmission waveform corresponding to the one piece of power headroom information is a target waveform, and the target waveform is a waveform to which the terminal is to switch for a PUSCH transmission;

the sending first information includes: sending the first information before receiving a first command; where the first command is used to instruct the terminal to perform a switching of an uplink transmission waveform.

In some embodiments, an uplink transmission waveform corresponding to the one piece of power headroom information is a waveform actually used for transmitting a PUSCH; the sending first information includes: sending the first information after receiving a first command; where the first command is used to instruct the terminal to perform a switching of an uplink transmission waveform.

In some embodiments, the uplink transmission waveform corresponding to the one piece of power headroom information is predefined and/or configured by an RRC signaling.

In some embodiments, the second information is carried in the following signaling: a redefined RRC signaling; or a newly added RRC signaling.

In some embodiments, the first information is carried in the following signaling: a redefined media access control control element (MAC-CE); or a newly added MAC-CE.

In some embodiments, the terminal transmits the PUSCH based on a single carrier or carrier aggregation (CA).

FIG. 4A is a flowchart of a method for determining power headroom report according to an embodiment of the present disclosure. As shown in FIG. 4A, the embodiment relates to a method for determining power headroom report. The method includes:

Step S4101: sending second information.

Optional implementations of step S4101 can refer to the optional implementations of step S2101 in FIG. 2 and other related parts in the embodiments involved in FIG. 2, which will not be repeated here.

In some embodiments, the network device 102 sends the second information to the terminal 101, but is not limited thereto, and may also send the second information to other entities.

Step S4102: obtaining first information.

Optional implementations of step S4102 can refer to the optional implementations of step S2102 in FIG. 2 and other related parts in the embodiments involved in FIG. 2, which will not be repeated here.

In some embodiments, the network device 102 receives the first information sent by the terminal 101, but is not limited thereto, and may also receive the first information sent by other entities.

In some embodiments, the network device 102 performs processing to obtain the first information.

In some embodiments, step S4102 is omitted, and the network device 102 autonomously implements the function indicated by the first information, or the function is default.

The communication method involved in the embodiments of the present disclosure may include at least one of steps S4101 to S4102. For example, step S4101 may be implemented as an independent embodiment, and step S4102 may be implemented as an independent embodiment, but it is not limited thereto.

In some embodiments, step S4101 is optional. In different embodiments, one or more of these steps may be omitted or substituted.

In some embodiments, step S4102 is optional. In different embodiments, one or more of these steps may be omitted or substituted.

FIG. 4B is a flowchart of a method for determining power headroom report according to an embodiment of the present disclosure. As shown in FIG. 4B, the embodiment relates to a method for determining power headroom report. The method includes:

Step S4201: sending a first command.

Optional implementations of step S4201 can refer to the optional implementations of step S2102 in FIG. 2 and other related parts in the embodiments involved in FIG. 2, which will not be repeated here.

Step S4202: obtaining first information.

Optional implementations of step S4202 can refer to the optional implementations of step S2102 in FIG. 2, step S4102 in FIG. 4A, and other related parts in the embodiments involved in FIG. 2 and FIG. 4A, which will not be repeated here.

The communication method involved in the embodiments of the present disclosure may include at least one of steps S4201 to S4202. For example, step S4201 may be implemented as an independent embodiment, and step S4202 may be implemented as an independent embodiment, but it is not limited thereto.

In some embodiments, the order of steps S4201 and S4202 may be exchanged.

In some embodiments, step S4201 is optional. In different embodiments, one or more of these steps may be omitted or substituted.

In some embodiments, step S4202 is optional. In different embodiments, one or more of these steps may be omitted or substituted.

FIG. 4C is a flowchart of a method for determining power headroom report according to an embodiment of the present disclosure. As shown in FIG. 4C, the embodiment relates to a method for determining power headroom report. The method includes:

Step S4301: receiving first information.

Optional implementations of step S4301 can refer to the optional implementations of step S2102 in FIG. 2, step S4102 in FIG. 4A, step S4202 in FIG. 4B, and other related parts in the embodiments involved in FIG. 2, FIG. 4A, and FIG. 4B, which will not be repeated here.

In some embodiments, the first information is used to indicate 1 or N pieces of power headroom information, the 1 or N pieces of power headroom information are carried in one power headroom report PHR, the type of the PHR is type 1, and N is an integer greater than 1; where the power headroom information at least includes PH and a configured maximum transmit power, different pieces of power headroom information correspond to different uplink transmission waveforms, and the uplink transmission waveforms are used to transmit a PUSCH.

In some embodiments, second information is sent, where the second information is used to instruct a terminal to report N pieces of power headroom information, and the N pieces of power headroom information correspond to N uplink transmission waveforms.

In some embodiments, the N pieces of power headroom information are determined based on at least one of: a currently transmitted PUSCH; a reference PUSCH configured by a network device; a last transmitted PUSCH within a time window.

In some embodiments, where a currently transmitted PUSCH and a PUSCH carrying the power headroom information report satisfy a time requirement, the N pieces of power headroom information are determined based on the currently transmitted PUSCH; the N pieces of power headroom information include: first power headroom information, where the first power headroom information includes an actual PH determined based on an uplink transmission waveform used in the currently transmitted PUSCH; second power headroom information, where the second power headroom information is virtual power headroom information determined based on a target waveform; and the target waveform is a waveform to which a terminal is to switch for a PUSCH transmission.

In some embodiments, where a currently transmitted PUSCH and a PUSCH carrying the power headroom information report do not satisfy a time requirement, or where a terminal is not currently transmitting a PUSCH, the N pieces of power headroom information are determined based on reference PUSCHs; the N pieces of power headroom information are virtual power headroom information determined based on different waveform configurations of the reference PUSCHs.

In some embodiments, the N pieces of power headroom information are virtual power headroom information determined based on different uplink transmission waveform configurations of a currently transmitted PUSCH.

In some embodiments, where a PUSCH transmission exists within a time window, a reference PUSCH is a last transmitted PUSCH within the time window.

In some embodiments, the configured maximum transmit power is determined based on a maximum power reduction (MPR), a power management maximum power reduction (P-MPR), and an additional maximum power reduction (A-MPR) of a terminal.

In some embodiments, the uplink transmission waveforms are discrete Fourier transform spread orthogonal frequency division multiplexing (DFT-s-OFDM) waveforms, and power headroom information corresponding to the DFT-s-OFDM waveforms is determined based on a contiguous frequency domain resource allocation (FDRA).

In some embodiments, the uplink transmission waveforms are cyclic prefix orthogonal frequency division multiplexing (CP-OFDM) waveforms, a first FDRA corresponding to the CP-OFDM waveforms is contiguous or non-contiguous, and power headroom information corresponding to DFT-s-OFDM waveforms is determined based on a second FDRA; the second FDRA is determined based on the first FDRA, and the second FDRA is a contiguous FDRA.

In some embodiments, the second information is not enabled or the second information is not configured, and the first information includes one piece of power headroom information.

In some embodiments, an uplink transmission waveform corresponding to the one piece of power headroom information is a target waveform, and the target waveform is a waveform to which a terminal is to switch for a PUSCH transmission;

the sending first information includes: sending the first information before receiving a first command; where the first command is used to instruct the terminal to perform a switching of an uplink transmission waveform.

In some embodiments, an uplink transmission waveform corresponding to the one piece of power headroom information is a waveform actually used for transmitting a PUSCH; the sending first information includes: sending the first information after receiving a first command; where the first command is used to instruct the terminal to perform a switching of an uplink transmission waveform.

In some embodiments, the uplink transmission waveform corresponding to the one piece of power headroom information is predefined and/or configured by an RRC signaling.

In some embodiments, the second information is carried in the following signaling: a redefined RRC signaling; or a newly added RRC signaling.

In some embodiments, the first information is carried in the following signaling: a redefined media access control control element (MAC-CE); or a newly added MAC-CE.

In some embodiments, the terminal transmits the PUSCH based on a single carrier or carrier aggregation (CA).

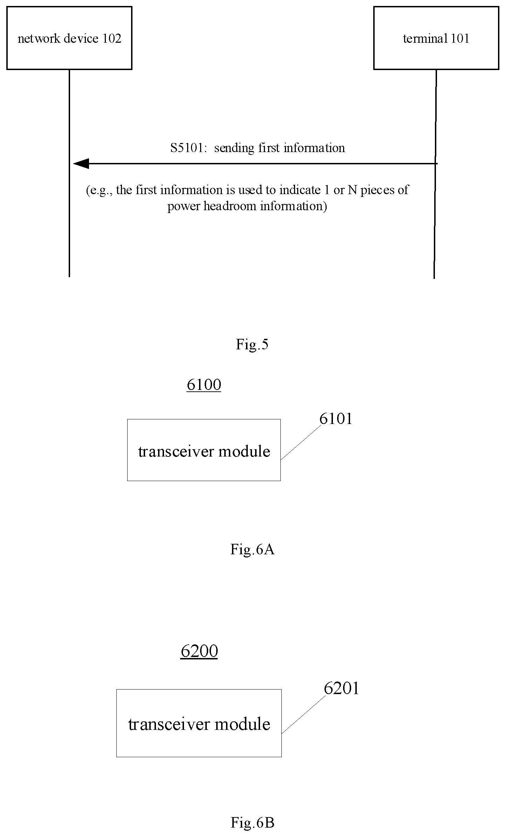

FIG. 5 is an interaction diagram of a method for determining power headroom report according to an embodiment of the present disclosure. As shown in FIG. 5, the embodiment relates to a method for determining power headroom report. The method includes:

Step S5101: the terminal 101 sending first information to the network device 102.

Optional implementations of step S5101 can refer to the optional implementations of step S2102 in FIG. 2, step S3102 in FIG. 3A, step S4102 in FIG. 4A, and other related parts in the embodiments involved in FIG. 2, FIG. 3A, and FIG. 4A, which will not be repeated here.

In some embodiments, the method may include the methods described in the embodiments on the communication system side, terminal side, network device side, etc., which will not be repeated here.

The embodiments of the present disclosure further provide a method for determining power headroom report, including: a terminal reports auxiliary information for uplink waveform switching, which is reported via a type 1 PHR. Corresponding configurations need to be enhanced, including:

Alt.1: The terminal can be configured via RRC signaling to simultaneously report PH information for 2 waveforms (CP-OFDM & DFT-s-OFDM) in one PHR report.

If this configuration is not enabled (disabled), it defaults to falling back to Alt.2 or Alt.3.

Configuring reporting of 2 PHRs includes:

Case 1: Corresponding to the situation where there is an actual PUSCH transmission, it is necessary to calculate and report 1 actual PHR based on the waveform used by the current PUSCH, and calculate and report another 1 virtual PHR based on the target waveform;

Case 2: Corresponding to the situation where there is no actual PUSCH transmission, 2 virtual PHRs calculated based on different waveforms can be calculated and reported based on a reference PUSCH or a previously scheduled PUSCH.

Situation 1: The calculation of the reference PUSCH can be configured separately based on two different waveforms;

Situation 2: If there was a previously scheduled PUSCH transmission within a certain time window, the scheduling parameters of that PUSCH can be used as the reference PUSCH for separate calculation and reporting based on the two different waveforms.

Virtual PHR calculation enhancement:

$P\_CMAX$ needs to be reported. Whether MPR, P-MPR, A-MPR need to be considered when calculating $P\_CMAX$; (currently the protocol does not report this)

Using the actual PUSCH scheduling configuration;

Using reference configurations and configuration information corresponding to previously scheduled PUSCHs;

For PH calculation of DFT-s-OFDM, reasonable default/reference RA configuration and other information settings need to be used; if the corresponding RA configuration of the CP-OFDM PUSCH is non-contiguous, it can correspond equivalently to a contiguous RA allocation or use a reference configuration with contiguous RA allocation for DFT-s-OFDM corresponding PH calculation;

Alt.2: Support PHR reporting before DWS switching takes effect, and only report PH information of the target waveform via predefinition or RRC signaling configuration;

Alt.3: Support PHR reporting after DWS switching, and only report PHR information of the current waveform via predefinition or RRC signaling configuration or via a new PHR trigger;

Optionally, the trigger method is DWS switching.

For the above reporting schemes, for the CA scenario, RRC signaling multiplePHR can be configured to be enabled, or new RRC signaling such as *multiplePHR-R18* can be defined to enable PHR reporting for DWS in CA/DC scenarios.

For Alt.1, a new MAC-CE and new twoPHRMode such as *twoPHRMode-R18* signaling need to be introduced to support it, including:

The current Enhanced Single Entry PHR for multiple TRP MAC CE cannot support DWS reporting, requiring a new design. Specific MAC-CE design: add a set of PH and P_CMAX reporting, as shown in FIG. 2B.

Specific MAC-CE design for CA/DC: extend the PHR reporting for each carrier as shown in FIG. 2B, and multi-carrier PHR reporting as shown in FIG. 2C or FIG. 2D.

The embodiments of the present disclosure also propose apparatuses for implementing any of the above methods. For example, an apparatus is proposed that includes units or modules for performing the steps executed by the terminal in any of the above methods. For another example, another apparatus is proposed that includes units or modules for performing the steps executed by the network device (e.g., access network device, core network function node, core network device, etc.) in any of the above methods.

It should be understood that the division of units or modules in the above apparatus is only a division of logical functions. In actual implementation, they may be fully or partially integrated into one physical entity, or may be physically separate. In addition, the units or modules in the apparatus may be implemented in the form of software invoked by a processor: for example, the apparatus includes a processor. The processor is connected to a memory. Instructions are stored in the memory. The processor invokes the instructions stored in the memory to implement any of the above methods or to implement the functions of the units or modules of the above apparatus. The processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits. The functions of some or all units or modules may be implemented by designing the hardware circuits. The hardware circuit may be understood as one or more processors. For example, in one implementation, the hardware circuit is an application-specific integrated circuit (ASIC). By designing the logical relationships between the components in the circuit, the functions of some or all of the units or modules are implemented. For another example, in another implementation, the hardware circuit may be implemented by a programmable logic device (PLD). Taking a field programmable gate array (FPGA) as an example, it may include a large number of logic gate circuits. The connection relationships between the logic gate circuits are configured through configuration files to implement the functions of some or all of the units or modules. All units or modules of the above apparatus may be implemented entirely in the form of software invoked by a processor, or entirely in the form of hardware circuits, or partly in the form of software invoked by a processor and the remaining part in the form of hardware circuits.

In the embodiments of the present disclosure, a processor is a circuit with signal processing capability. In one implementation, the processor may be a circuit with the ability to read and run instructions, such as a central processing unit (CPU), a microprocessor, a graphics processing unit (GPU) (which can be understood as a microprocessor), or a digital signal processor (DSP), etc. In another implementation, the processor may implement certain functions through the logical relationships of hardware circuits. The logical relationships of the hardware circuits are fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading configuration documents to implement hardware circuit configuration can be understood as the process of the processor loading instructions to implement the functions of some or all of the units or modules described above. In addition, it may also be a hardware circuit designed for artificial intelligence, which can be understood as an ASIC, such as a neural network processing unit (NPU), a tensor processing unit (TPU), a deep learning processing unit (DPU), etc.

FIG. 6A is a structural diagram of a terminal according to an embodiment of the present disclosure. As shown in FIG. 6A, a terminal 6100 may include: a transceiver module 6101. In some embodiments, the transceiver module is configured to send first information, where the first information is used to indicate 1 or N pieces of power headroom information, the 1 or N pieces of power headroom information are carried in one power headroom report PHR, the type of the PHR is type 1, and N is an integer greater than 1; where the power headroom information at least includes power headroom PH and a maximum transmit power, different pieces of power headroom information correspond to different uplink transmission waveforms, and the different uplink transmission waveforms are used to transmit physical uplink shared channels (PUSCHs). Optionally, the transceiver module is configured to perform at least one of the sending and/or receiving communication steps (e.g., steps S2101, S2102, but not limited thereto) executed by the terminal 101 in any of the above methods, which will not be repeated here.

FIG. 6B is a structural diagram of a network device according to an embodiment of the present disclosure. As shown in FIG. 6B, a network device 6200 may include: a transceiver module 6201. In some embodiments, the transceiver module is configured to receive first information, where the first information is used to indicate 1 or N pieces of power headroom information, the 1 or N pieces of power headroom information are carried in one power headroom report PHR, the type of the PHR is type 1, and N is an integer greater than 1; where the power headroom information at least includes power headroom PH and a maximum transmit power, different pieces of power headroom information correspond to different uplink transmission waveforms, and the different uplink transmission waveforms are used to transmit physical uplink shared channels (PUSCHs). Optionally, the transceiver module is configured to perform at least one of the sending and/or receiving communication steps (e.g., steps S2101, S2102, but not limited thereto) executed by the network device 102 in any of the above methods, which will not be repeated here.

In some embodiments, the transceiver module may include a sending module and/or a receiving module. The sending module and the receiving module may be separate or integrated together. Optionally, the transceiver module may be interchangeable with a transceiver.

In some embodiments, the processing module may be one module or may include multiple sub-modules. Optionally, the multiple sub-modules respectively perform all or part of the steps required to be performed by the processing module. Optionally, the processing module may be interchangeable with a processor.

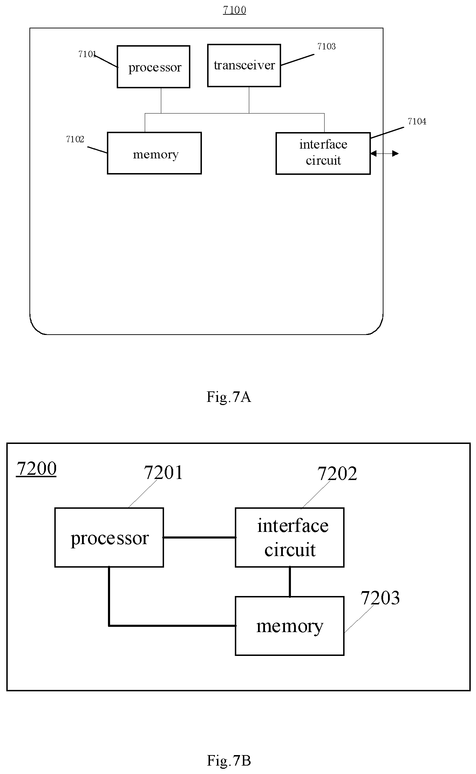

FIG. 7A is a structural diagram of a communication device 7100 according to an embodiment of the present disclosure. The communication device 7100 may be a network device (e.g., an access network device, a core network device, etc.), or a terminal (e.g., a user equipment, etc.), or a chip, chip system, or processor that supports a network device to implement any of the above methods, or a chip, chip system, or processor that supports a terminal to implement any of the above methods. The communication device 7100 may be used to implement the methods described in the above method embodiments. For details, refer to the descriptions in the above method embodiments.

As shown in FIG. 7A, the communication device 7100 includes one or more processors 7101. The processor 7101 may be a general-purpose processor or a special-purpose processor, etc., for example, a baseband processor or a central processing unit. The baseband processor may be used to process communication protocols and com03munication data. The central processing unit may be used to control the communication apparatus (e.g., a base station, a baseband chip, a terminal device, a terminal device chip, a DU or a CU, etc.), execute programs, and process program data. The communication device 7100 is configured to execute any of the above methods.

In some embodiments, the communication device 7100 further includes one or more memories 7102 for storing instructions. Optionally, all or part of the memory 7102 may also be outside the communication device 7100.

In some embodiments, the communication device 7100 further includes one or more transceivers 7103. When the communication device 7100 includes one or more transceivers 7103, the transceiver(s) 7103 perform at least one of the sending and/or receiving communication steps (e.g., steps S2101, S2102, but not limited thereto) in the above methods, and the processor 7101 performs the other steps.

In some embodiments, a transceiver may include a receiver and/or a transmitter. The receiver and the transmitter may be separate or integrated together. Optionally, terms such as transceiver, transceiver unit, transceiver machine, transceiver circuit, etc. may be used interchangeably. Terms such as transmitter, transmitter unit, transmitter machine, transmitter circuit, etc. may be used interchangeably. Terms such as receiver, receiver unit, receiver machine, receiver circuit, etc. may be used interchangeably.

In some embodiments, the communication device 7100 may include one or more interface circuits 7104. Optionally, the interface circuit 7104 is connected to the memory 7102. The interface circuit 7104 may be used to receive signals from the memory 7102 or other devices, and may be used to send signals to the memory 7102 or other devices. For example, the interface circuit 7104 may read instructions stored in the memory 7102 and send the instructions to the processor 7101.

The communication device 7100 described in the above embodiments may be a network device or a terminal, but the scope of the communication device 7100 described in the present disclosure is not limited thereto. The structure of the communication device may not be limited by

FIG. 7A. The communication device may be an independent device or may be part of a larger device. For example, the communication device may be: 1) an independent integrated circuit (IC), or chip, or chip system or subsystem; (2) a set of one or more ICs, optionally, the set of ICs may also include storage components for storing data and programs; (3) an ASIC, such as a modem (Modem); (4) a module embeddable in other devices; (5) a receiver, terminal device, smart terminal device, cellular phone, wireless device, handset, mobile unit, vehicle-mounted device, network device, cloud device, artificial intelligence device, etc.; (6) others, etc.

FIG. 7B is a structural diagram of a chip 7200 according to an embodiment of the present disclosure. For the case where the communication device 7100 may be a chip or chip system, refer to the structural diagram of the chip 7200 shown in FIG. 7B, but it is not limited thereto.

The chip 7200 includes one or more processors 7201. The chip 7200 is configured to execute any of the above methods.

In some embodiments, the chip 7200 further includes one or more interface circuits 7202. Optionally, the interface circuit 7202 is connected to a memory 7203. The interface circuit 7202 may be used to receive signals from the memory 7203 or other devices. The interface circuit 7202 may be used to send signals to the memory 7203 or other devices. For example, the interface circuit 7202 may read instructions stored in the memory 7203 and send the instructions to the processor 7201.

In some embodiments, the interface circuit 7202 performs at least one of the sending and/or receiving communication steps (e.g., steps S2101, S2102, but not limited thereto) in the above methods, and the processor 7201 performs the other steps.

In some embodiments, terms such as interface circuit, interface, transceiver pin, transceiver, etc. may be used interchangeably.

In some embodiments, the chip 7200 further includes one or more memories 7203 for storing instructions. Optionally, all or part of the memory 7203 may be outside the chip 7200.

The present disclosure further provides a storage medium. Instructions are stored on the storage medium. When the instructions run on the communication device 7100, the communication device 7100 is caused to execute any of the above methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure further provides a program product. When the program product is executed by the communication device 7100, the communication device 7100 is caused to execute any of the above methods. Optionally, the program product is a computer program product.

The present disclosure further provides a computer program. When it runs on a computer, the computer is caused to execute any of the above methods.

**Claims**

1. A method for determining power headroom report (PHR), comprising:

   sending first information, wherein the first information is used to indicate 1 or N pieces of power headroom information, the 1 or N pieces of power headroom information is carried in one PHR, a type of the PHR is type 1, and the N is an integer greater than 1;
   wherein the power headroom information at least comprises a power headroom (PH) and a configured maximum transmit power, different pieces of power headroom information correspond respectively to different uplink transmission waveforms, and the different uplink transmission waveforms are used to transmit physical uplink shared channels (PUSCHs).

2. The method according to claim 1, further comprising:
   receiving second information, wherein the second information is used to instruct a terminal to report the N pieces of power headroom information, and the N pieces of power headroom information correspond respectively to N uplink transmission waveforms.

3. The method according to claim 1 or 2, wherein the N pieces of power headroom information are determined based on at least one of:

   a currently transmitted PUSCH;
   a reference PUSCH configured by a network device; or
   a last transmitted PUSCH within a time window.

4. The method according to any one of claims 1 to 3, wherein

   in a case where a currently transmitted PUSCH and a PUSCH carrying the PHR satisfy a time requirement, the N pieces of power headroom information are determined based on the currently transmitted PUSCH;
   the N pieces of power headroom information comprise:

   first power headroom information, wherein the first power headroom information is actual power headroom information determined based on an uplink transmission waveform used in the currently transmitted PUSCH;
   second power headroom information, wherein the second power headroom information is virtual power headroom information determined based on a target waveform, and the target waveform is a waveform to which a terminal is to switch for a PUSCH transmission.

5. The method according to any one of claims 1 to 3, wherein

   in a case where a currently transmitted PUSCH and a PUSCH carrying the PHR do not satisfy a time requirement, or in a case where a terminal is not currently transmitting a PUSCH, the N pieces of power headroom information are determined based on reference PUSCHs, wherein the reference PUSCHs are configured respectively based on different uplink transmission waveforms;
   the N pieces of power headroom information are virtual power headroom information determined based on different uplink transmission waveform configurations of the reference PUSCHs.

6. The method according to any one of claims 1 to 3, wherein the N pieces of power headroom information are virtual power headroom information determined based on different uplink transmission waveform configurations of a currently transmitted PUSCH.

7. The method according to any one of claims 1 to 3, wherein in a case where a PUSCH transmission exists in a time window, a reference PUSCH is a last transmitted PUSCH within the time window.

8. The method according to any one of claims 1 to 7, wherein the configured maximum transmit power is determined based on a maximum power reduction (MPR), a power management maximum power reduction (P-MPR) and an additional maximum power reduction (A-MPR) of a terminal.

9. The method according to any one of claims 1 to 8, wherein the uplink transmission waveforms are discrete Fourier transform spread orthogonal frequency division multiplexing (DFT-s-OFDM) waveforms, and power headroom information corresponding to the DFT-s-OFDM waveforms is determined based on a contiguous frequency domain resource allocation (FDRA).

10. The method according to any one of claims 1 to 9, wherein the uplink transmission waveforms are a cyclic prefix orthogonal frequency division multiplexing (CP-OFDM) waveforms, a first FDRA corresponding to the CP-OFDM waveforms is contiguous or non-contiguous, and power headroom information corresponding to DFT-s-OFDM waveforms is determined based on a second FDRA;
the second FDRA is determined based on the first FDRA or the second FDRA is determined based on a pre-configuration, and the second FDRA is a contiguous FDRA.

11. The method according to any one of claims 2 to 10, wherein
the second information is not enabled or the second information is not configured, and the first information comprises one piece of power headroom information.

12. The method according to claim 11, wherein an uplink transmission waveform corresponding to the one piece of power headroom information is a target waveform, and the target waveform is a waveform to which the terminal is to switch for a PUSCH transmission;
sending the first information comprises:

sending the first information before receiving a first command,
wherein the first command is used to instruct the terminal to perform a switching of an uplink transmission waveform.

13. The method according to claim 11, wherein an uplink transmission waveform corresponding to the one piece of power headroom information is a waveform actually used for transmitting a PUSCH;
the sending first information comprises:

sending the first information after receiving a first command,
wherein the first command is used to instruct the terminal to perform a switching of an uplink transmission waveform.

14. The method according to claim 12 or 13, wherein the uplink transmission waveform corresponding to the one piece of power headroom information is predefined and/or configured by an RRC signaling.

15. The method according to any one of claims 2 to 10, wherein the second information is carried in a redefined RRC signaling or a newly added RRC signaling.

16. The method according to any one of claims 2 to 10, wherein the first information is carried in a redefined media access control control element (MAC-CE) or a newly added MAC-CE.

17. The method according to claim 15 or 16, wherein the terminal is used to perform a PUSCH transmission in a single carrier or based on a carrier aggregation (CA).

18. A method for determining power headroom report (PHR), comprising:

receiving first information, wherein the first information is used to indicate 1 or N pieces of power headroom information, the 1 or N pieces of power headroom information is carried in one PHR, a type of the PHR is type 1, and the N is an integer greater than 1;
wherein the power headroom information at least comprises a power headroom (PH) and a configured maximum transmit power, different pieces of power headroom information correspond respectively to different uplink transmission waveforms, and the different uplink transmission waveforms are used to transmit physical uplink shared channels (PUSCHs).

19. The method according to claim 18, further comprising:
sending second information, wherein the second information is used to instruct a terminal to report the N pieces of power headroom information, and the N pieces of power headroom information correspond respectively to N uplink transmission waveforms.

20. The method according to claim 18 or 19, wherein the N pieces of power headroom information are determined based on at least one of:

a currently transmitted PUSCH;
a reference PUSCH configured by a network device; or
a last transmitted PUSCH within a time window.

21. The method according to any one of claims 18 to 20, wherein

in a case where a currently transmitted PUSCH and a PUSCH carrying the PHR satisfy a time requirement, the N pieces of power headroom information are determined based on the currently transmitted PUSCH;
the N pieces of power headroom information comprise:

first power headroom information, wherein the first power headroom information is actual power headroom information determined based on an uplink transmission waveform used in the currently transmitted PUSCH;
second power headroom information, wherein the second power headroom information is virtual power headroom information determined based on a target waveform, and the target waveform is a waveform to which a terminal is to switch for a PUSCH transmission.

22. The method according to any one of claims 18 to 20, wherein

in a case where a currently transmitted PUSCH and a PUSCH carrying the PHR do not satisfy a time requirement, or in a case where a terminal is not currently transmitting a PUSCH, the N pieces of power headroom information are determined based on reference PUSCHs, wherein the reference PUSCHs are configured respectively based on different uplink transmission waveforms;
the N pieces of power headroom information are virtual power headroom information determined based on different uplink transmission waveform configurations of the reference PUSCHs.

23. The method according to any one of claims 18 to 20, wherein the N pieces of power headroom information are virtual power headroom information determined based on different uplink transmission waveform configurations of a currently transmitted PUSCH.

24. The method according to any one of claims 18 to 20, wherein in a case where a PUSCH transmission exists in a time window, a reference PUSCH is a last transmitted PUSCH within the time window.

25. The method according to any one of claims 18 to 24, wherein the configured maximum transmit power is determined based on a maximum power reduction (MPR), a power management maximum power reduction (P-MPR) and an additional maximum power reduction (A-MPR) of a terminal.

26. The method according to any one of claims 18 to 24, wherein the uplink transmission waveforms are discrete Fourier transform spread orthogonal frequency division multiplexing (DFT-s-OFDM) waveforms, and power headroom information corresponding to the DFT-s-OFDM waveforms is determined based on a contiguous frequency domain resource allocation (FDRA).

27. The method according to any one of claims 18 to 26, wherein the uplink transmission waveforms are cyclic prefix orthogonal frequency division multiplexing (CP-OFDM) waveforms, a first FDRA corresponding to the CP-OFDM waveforms is contiguous or non-contiguous, and power headroom information corresponding to DFT-s-OFDM waveforms is determined based on a second FDRA;
the second FDRA is determined based on the first FDRA or the second FDRA is determined based on a pre-configuration, and the second FDRA is a contiguous FDRA.

28. The method according to any one of claims 19 to 27, wherein
the second information is not enabled or the second information is not configured, the first information comprises one piece of power headroom information.

29. The method according to claim 28, wherein an uplink transmission waveform corresponding to the one piece of power headroom information is a target waveform, and the target waveform is a waveform to which a terminal is to switch for a PUSCH transmission;
the receiving first information comprises:

receiving the first information before sending a first command;
wherein the first command is used to instruct the terminal to perform a switching of an uplink transmission waveform.

30. The method according to claim 28, wherein an uplink transmission waveform corresponding to the one piece of power headroom information is a waveform actually used for transmitting a PUSCH;
the receiving first information comprises:

receiving the first information after sending a first command;
wherein the first command is used to instruct the terminal to perform a switching of an uplink transmission waveform.

31. The method according to claim 29 or 30, wherein the uplink transmission waveform corresponding to the one piece of power headroom information is predefined and/or configured by an RRC signaling.

32. The method according to any one of claims 19 to 31, wherein the second information is carried in a redefined RRC signaling or a newly added RRC signaling.

33. The method according to any one of claims 19 to 31, wherein the first information is carried in a redefined media access control control element (MAC-CE) or a newly added MAC-CE.

34. The method according to claim 32 or 33, wherein the terminal is used to perform a PUSCH transmission in a single carrier or based on a carrier aggregation (CA).

35. A method for determining power headroom report (PHR), comprising:

sending, by a terminal, first information to a network device, wherein the first information is used to indicate 1 or N pieces of power headroom information, the 1 or N pieces of power headroom information is carried in one PHR, a type of the PHR is type 1, and the N is an integer greater than 1; wherein the power headroom information at least comprises a power headroom (PH) and a configured maximum transmit power, different pieces of power headroom information correspond respectively to different uplink transmission waveforms, and the different uplink transmission waveforms are used to transmit physical uplink shared channels (PUSCHs); and
receiving, by the network device, the first information.

36. A terminal, comprising:

a transceiver module configured to send first information, wherein the first information is used to indicate 1 or N pieces of power headroom information, the 1 or N pieces of power headroom information is carried in one PHR, a type of the PHR is type 1, and the N is an integer greater than 1;
wherein the power headroom information at least comprises a power headroom (PH) and a configured maximum transmit power, different pieces of power headroom information correspond respectively to different uplink transmission waveforms, and the different uplink transmission waveforms are used to transmit physical uplink shared channels (PUSCHs).

37. A network device, comprising:

a transceiver module configured to receive first information, wherein the first information is used to indicate 1 or N pieces of power headroom information, the 1 or N pieces of power headroom information is carried in one PHR, a type of the PHR is type 1, and the N is an integer greater than 1;
wherein the power headroom information at least comprises a power headroom (PH) and a maximum transmit power, different pieces of power headroom information correspond respectively to different uplink transmission waveforms, and the different uplink transmission waveforms are used to transmit physical uplink shared channels (PUSCHs).

38. A terminal, comprising one or more processors,
   wherein the one or more processors are configured to perform the method for determining PHR according to any one of claims 1 to 17.

39. A network device, comprising one or more processors,
   wherein the one or more processors are configured to execute the method for determining PHR according to any one of claims 18 to 34.

40. A communication system, comprising a terminal and a network device, wherein the terminal is configured to implement the method for determining PHR according to any one of claims 1 to 17, and the network device is configured to implement the method for determining PHR according to any one of claims 18 to 34.

41. A storage medium, having stored therein instructions that, when running on a communication device, cause the communication device to perform the method for determining PHR according to any one of claims 1 to 17 and 18 to 34.

communication system
100

terminal 101 — network device 102

Fig.1A

| P | reserved bit | power headroom (type 1, primary cell) |
|---|---|---|
| MPE or reserved bit | | maximum transmit power |

Fig.1B

| $C_7$ | $C_6$ | $C_5$ | $C_4$ | $C_3$ | $C_2$ | $C_1$ | reserved bit |
|---|---|---|---|---|---|---|---|
| P | V | power headroom (type 2, special cell or other MAC entity) | | | | | |
| MPE or reserved bit | | maximum transmit power 1 | | | | | |
| P | V | power headroom (type 1, primary cell) | | | | | |
| MPE or reserved bit | | maximum transmit power 2 | | | | | |
| P | V | power headroom (type X, serving cell 1) | | | | | |
| MPE or reserved bit | | maximum transmit power 3 | | | | | |

......

| P | V | power headroom (type X, serving cell n) | | | | | |
|---|---|---|---|---|---|---|---|
| MPE or reserved bit | | maximum transmit power m | | | | | |

Fig.1C

network device 102

terminal 101

S2101: sending second information

(e.g., the second information is used to instruct the terminal to report N pieces of power headroom information)

S2102: sending first information

(e.g., the first information is used to indicate N pieces of power headroom information)

Fig.2A

| P | reserved bit | power headroom (type 1, primary cell) |
| MPE or reserved bit | | maximum transmit power |

| P | reserved bit | power headroom (type 1, primary cell) |
| MPE or reserved bit | | maximum transmit power |

Fig.2B

| $C_7$ | $C_6$ | $C_5$ | $C_4$ | $C_3$ | $C_2$ | $C_1$ | reserved bit |
|---|---|---|---|---|---|---|---|
| P | V | power headroom (type 2, special cell or other MAC entity) | | | | | |
| MPE or reserved bit | | maximum transmit power 10 | | | | | |
| P | V | power headroom (type 2, special cell or other MAC entity) | | | | | |
| MPE or reserved bit | | maximum transmit power 11 | | | | | |
| P | V | power headroom (type 1, primary cell) | | | | | |
| MPE or reserved bit | | maximum transmit power 20 | | | | | |
| P | V | power headroom (type 1, primary cell) | | | | | |
| MPE or reserved bit | | maximum transmit power 21 | | | | | |
| P | V | power headroom (type 1, serving cell 1) | | | | | |
| MPE or reserved bit | | maximum transmit power 30 | | | | | |
| P | V | power headroom (type 1, serving cell 1) | | | | | |
| MPE or reserved bit | | maximum transmit power 31 | | | | | |

......

| | | |
|---|---|---|
| P | V | power headroom (type 1, serving cell n) |
| MPE or reserved bit | | maximum transmit power m0 |
| P | V | power headroom (type 1, serving cell n) |
| MPE or reserved bit | | maximum transmit power m1 |

Fig.2C

| $C_7$ | $C_6$ | $C_5$ | $C_4$ | $C_3$ | $C_2$ | $C_1$ | reserved bit |
|---|---|---|---|---|---|---|---|
| P | V | power headroom (type 1, primary cell) | | | | | |
| MPE or reserved bit | | maximum transmit power 10 | | | | | |
| P | V | power headroom (type 1, primary cell) | | | | | |
| MPE or reserved bit | | maximum transmit power 11 | | | | | |
| P | V | power headroom (type 1, serving cell 1) | | | | | |
| MPE or reserved bit | | maximum transmit power 20 | | | | | |
| P | V | power headroom (type 1, serving cell 1) | | | | | |
| MPE or reserved bit | | maximum transmit power 21 | | | | | |

......

| P | V | power headroom (type 1, serving cell n) | | | | | |
|---|---|---|---|---|---|---|---|
| MPE or reserved bit | | maximum transmit power m0 | | | | | |
| P | V | power headroom (type 1, serving cell n) | | | | | |
| MPE or reserved bit | | maximum transmit power m1 | | | | | |

Fig.2D

| S3101: obtaining second information<br>(e.g., the second information is used to instruct the terminal to report N pieces of power headroom information) |
|---|

↓

| S3102: sending first information<br>(e.g., the first information is used to indicate N pieces of power headroom information) |
|---|

Fig.3A

S3201: receiving a first command (e.g., the first command is used to instruct the terminal to switch waveforms)

S3202: sending first information (e.g., the first information is used to indicate power headroom information)

Fig.3B

S3301: sending first information (e.g., the first information is used to indicate 1 or N pieces of power headroom information)

Fig.3C

S4101: sending second information (e.g., the second information is used to instruct a terminal to report N pieces of power headroom information)

S4102: obtaining first information
(e.g., the first information is used to indicate N pieces of power headroom information)

Fig.4A

S4201: sending a first command
(e.g., the first command is used to instruct the terminal to switch waveforms)

S4202: obtaining first information (e.g., the first information is used to indicate power headroom information)

Fig.4B

S4301: receiving first information
(e.g., the first information is used to indicate 1 or N pieces of power headroom information)

Fig.4C

network device 102

terminal 101

S5101: sending first information

(e.g., the first information is used to indicate 1 or N pieces of
power headroom information)

Fig.5

6100

transceiver module

6101

Fig.6A

6200

transceiver module

6201

Fig.6B

7100

7101 — processor

7103 — transceiver

7102 — memory

interface
circuit

7104

Fig.7A

7200

7201 — processor

7202 — interface
circuit

7203 — memory

Fig.7B

## INTERNATIONAL SEARCH REPORT

| International application No. |
|---|
| **PCT/CN2023/107983** |

| A. | CLASSIFICATION OF SUBJECT MATTER |
|---|---|

H04W52/36(2009.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXTC, DWPI: 波形, 功率余量, 功率余量报告, 调度, PHR, Power Headroom Report, waveform, PUSCH, schedule

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109286949 A (VIVO COMMUNICATION TECHNOLOGY CO., LTD.) 29 January 2019 (2019-01-29)<br>description, paragraphs [0004]-[0097], and figures 1-3 | 1-41 |
| A | CN 109891950 A (QUALCOMM INC.) 14 June 2019 (2019-06-14)<br>entire document | 1-41 |
| A | CN 110536400 A (HUAWEI TECHNOLOGIES CO., LTD.) 03 December 2019 (2019-12-03)<br>entire document | 1-41 |
| A | WO 2018177549 A1 (NOKIA SOLUTIONS AND NETWORKS OY et al.) 04 October 2018 (2018-10-04)<br>entire document | 1-41 |
| A | ERICSSON. "Power Headroom Report in NR"<br>*3GPP TSG-RAN WG2 #99 Tdoc. R2-1708199*, 25 August 2017 (2017-08-25),<br>entire document | 1-41 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 March 2024** | **21 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/107983**

| Patent document cited in search report | | | Publication date (day/month/year) | Patent family member(s) | | | Publication date (day/month/year) |
|---|---|---|---|---|---|---|---|
| CN | 109286949 | A | 29 January 2019 | WO | 2019015469 | A1 | 24 January 2019 |
| CN | 109891950 | A | 14 June 2019 | WO | 2018081050 | A1 | 03 May 2018 |
| | | | | EP | 3533262 | A1 | 04 September 2019 |
| | | | | US | 2018124710 | A1 | 03 May 2018 |
| CN | 110536400 | A | 03 December 2019 | WO | 2019223657 | A1 | 28 November 2019 |
| WO | 2018177549 | A1 | 04 October 2018 | | None | | |

Form PCT/ISA/210 (patent family annex) (July 2022)